(19) Europäisches Patentamt
European Patent Office
Office européen des brevets

(11) **EP 3 707 775 B1**

(12) **EUROPÄISCHE PATENTSCHRIFT**

(45) Veröffentlichungstag und Bekanntmachung des Hinweises auf die Patenterteilung:
**23.02.2022   Patentblatt 2022/08**

(21) Anmeldenummer: **18796034.9**

(22) Anmeldetag: **31.10.2018**

(51) Internationale Patentklassifikation (IPC):
**H01P 5/08** $^{(2006.01)}$    **H01Q 9/28** $^{(2006.01)}$
**H01Q 21/26** $^{(2006.01)}$   **H01Q 19/10** $^{(2006.01)}$
**H01Q 5/364** $^{(2015.01)}$   **H01Q 5/378** $^{(2015.01)}$
**H01Q 9/06** $^{(2006.01)}$

(52) Gemeinsame Patentklassifikation (CPC):
**H01Q 9/285; H01P 5/087; H01Q 5/364; H01Q 5/378; H01Q 9/065; H01Q 19/108; H01Q 21/26**

(86) Internationale Anmeldenummer:
**PCT/EP2018/079844**

(87) Internationale Veröffentlichungsnummer:
**WO 2019/091846 (16.05.2019 Gazette 2019/20)**

(54) **EIN- UND AUSKOPPLUNGSVORRICHTUNG ZWISCHEN EINEM SCHALTUNGSTRÄGER UND EINEM WELLENLEITER**

COUPLING AND DECOUPLING DEVICE BETWEEN A CIRCUIT CARRIER AND A WAVEGUIDE

DISPOSITIF DE COUPLAGE ET DÉCOUPLAGE ENTRE UN SUPPORT DE CIRCUIT ET UN GUIDE D'ONDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.11.2017   DE 102017126112**

(43) Veröffentlichungstag der Anmeldung:
**16.09.2020   Patentblatt 2020/38**

(73) Patentinhaber: **ROSENBERGER HOCHFREQUENZTECHNIK GMBH & CO. KG 83413 Fridolfing (DE)**

(72) Erfinder:
• WOLLITZER, Michael
  83413 Fridolfing (DE)
• REUM, Thomas
  36448 Bad Liebenstein (DE)

(56) Entgegenhaltungen:
AU-B2- 761 339     DE-A1- 10 035 820
KR-B1- 101 788 516     US-A- 4 241 323

• LEHMENSIEK ROBERT: "A design methodology of the wideband orthogonal mode transducer for the SKA Band 2 feed", 2016 10TH EUROPEAN CONFERENCE ON ANTENNAS AND PROPAGATION (EUCAP), EUROPEAN ASSOCIATION OF ANTENNAS AND PROPAGATION, 10. April 2016 (2016-04-10), Seiten 1-4, XP032906828, DOI: 10.1109/EUCAP.2016.7481872 [gefunden am 2016-05-31]
• JAE-HOON BANG ET AL: "A New Dual Circularly Polarized Feed Employing a Dielectric Cylinder-Loaded Circular Waveguide Open End Fed by Crossed Dipoles", INTERNATIONAL JOURNAL OF ANTENNAS AND PROPAGATION, Bd. 2016, 1. Januar 2016 (2016-01-01), Seiten 1-7, XP055547597, ISSN: 1687-5869, DOI: 10.1155/2016/7570316

EP 3 707 775 B1

**Beschreibung**

GEBIET DER ERFINDUNG

Die vorliegende Erfindung betrifft eine Ein- und Auskopplungsvorrichtung zwischen einem Schaltungsträger und einem Wellenleiter.

TECHNISCHER HINTERGRUND

Für die Übertragung einer elektromagnetischen Welle in einem Wellenleiter, bevorzugt einem dielektrischen Wellenleiter, besitzt eine elliptisch polarisierte elektromagnetische Welle, bevorzugt eine zirkular polarisierte elektromagnetische Welle, gegenüber einer linear polarisierten elektromagnetischen Welle technische Vorteile.

Eine elliptisch polarisierte oder eine zirkular polarisierte elektromagnetische Welle wird vorzugsweise aus einer dual polarisierten elektromagnetischen Welle, d.h. aus zwei linear polarisierten elektromagnetischen Wellen, deren Polarisationsebenen jeweils orthogonal zueinander orientiert sind, erzeugt.

Eine einzige linear polarisierte elektromagnetische Welle wird, wie beispielsweise aus der US 9,728,833 B2 hervorgeht, aus einem zugehörigen Hochfrequenzsignal erzeugt, das einer Antenne über eine Hochfrequenzleitung zugeführt und in der Antenne als zugehörige elektromagnetische Welle abgestrahlt wird. Das Hochfrequenzsignal wird typischerweise mittels einer Hochfrequenz-Elektronik, bevorzugt mittels eines Frequenz-Oszillators, auf einer planaren Struktur, d.h. entweder auf einer Leiterplatte oder auf einem Substrat, erzeugt.

Aus Lehmensiek Robert: "A design methodology of the wideband orthogonal mode transducer for SKA Band 2 feed", 10. April 2016, geht eine Anordnung mit zwei orthogonal zueinander orientierten Dipolantennen hervor, die innerhalb eines Vakuum-Doms eines Radoms angeordnet ist und zirkular polarisierte elektromagnetische Wellen für Anwendungen in der Radio-Astronomie ausstrahlt bzw. empfängt.

Jae-Hoon Bang et al.: "A new dual circularly polarized feed employing a dielectric cylinder-loaded circular waveguide open end fed by crossed dipoles", 1. Januar 2016, Seiten 1 - 7, offenbart eine Anordnung mit zwei orthogonal zueinander orientierten Dipolantennen innerhalb eines Hohlleiters, die elektromagnetische Wellen in den Anwendungsfeldern Satellitenkommunikation, Flugnavigation, Untergrundradar (Archäologie) und meteorologischen Radar ausstrahlen bzw. empfangen.

Die DE 100 35 820 A1 beschreibt zwei orthogonal zueinander orientierte Dipolantennen für die gleichzeitige Anwendung in mehreren Funkdiensten, beispielsweise Mobilfunk und Satellitenfunk.

Aus der AU 761 339 B2 geht ein Mikrowellenfilter hervor, das einen Hohlleiter mit mehreren Blenden und jeweils eine Anordnung aus orthogonal zueinander orientierten Dipolantennen an jeder Öffnung des Hohlleiters aufweist.

Die US 4 241 323 A offenbart ein Mikrowellenfilter aus einem Hohlleiter, in dem Blenden und metallische Schrauben angeordnet sind.

Für eine aufwandsarme Ein- oder Ausspeisung einer elliptisch oder zirkular polarisierten elektromagnetischen Welle in einen bzw. aus einem Wellenleiter, bevorzugt in einen bzw. aus einem dielektrischen Wellenleiter, über eine Antennenanordnung mit einer hohen Bandbreite und einer hohen Richtcharakteristik existiert bisher keine brauchbare technische Lösung.

Dies ist ein Zustand, den es zu verbessern gilt.

ZUSAMMENFASSUNG DER ERFINDUNG

Vor diesem Hintergrund liegt der vorliegenden Erfindung die Aufgabe zugrunde, eine Ein- und Auskopplungsvorrichtung zwischen einem Schaltungsträger und einem Wellenleiter, bevorzugt einem dielektrischen Wellenleiter, mit einer Antennenanordnung zum Senden und Empfangen einer dual polarisierten elektromagnetischen Welle anzugeben, die eine möglichst hohe Bandbreite und eine hohe Richtcharakteristik aufweist. Erfindungsgemäß wird diese Aufgabe durch eine Ein- und Auskopplungsvorrichtung zwischen einem Schaltungsträger und einem Wellenleiter mit den Merkmalen des Patentanspruchs 1 gelöst.

Demgemäß ist vorgesehen:
Eine Ein- und Auskopplungsvorrichtung umfassend

- ein Halteelement,
- einen Schaltungsträger,
- einen Wellenleiter,
- wobei das Halteelement ein erstes Ende aufweist, an dem das Halteelement an den Schaltungsträger gekoppelt ist, und
- wobei das Halteelement ein zweites Ende aufweist, an dem das Halteelement an den Wellenleiter gekoppelt ist,

- zwei Dipolantennen, die zwischen dem ersten Ende und dem zweiten Ende überkreuzt und orthogonal zueinander angeordnet sind, und
- zwei überkreuzt zueinander angeordnete Leiterpaare, die mit den beiden Dipolantennen und mit zugehörigen Kontaktflächen auf dem Schaltungsträger verbunden sind,
- wobei am ersten Ende eine elektrisch leitende Schicht befestigt ist,
- wobei das Halteelement ein Hohlleiter ist,
- wobei das erste Ende des Halteelements eine erste stirnseitige Öffnung des Hohlleiters ist, an der der Schaltungsträger gekoppelt ist, und
- das zweite Ende des Halteelements eine zweite stirnseitige Öffnung des Hohlleiters ist, an der der Wellenleiter gekoppelt ist,
- wobei die erste stirnseitige Öffnung mit der elektrisch leitenden Schicht abgeschlossen ist,
- wobei jede Dipolantenne jeweils auf einer der ersten stirnseitigen Öffnung zugewandten Stirnfläche oder auf einer der zweiten stirnseitigen Öffnung jeweils zugewandten Stirnfläche einer Trägermembran aufgebracht ist,
- die in einem an die erste stirnseitige Öffnung sich anschließenden Bereich des Hohlleiters mit dem Hohlleiter verbunden ist.

Die der vorliegenden Erfindung zugrunde liegende Erkenntnis/Idee besteht darin, ein als Hohlleiter ausgeführtes Halteelement mit zwei Enden vorzusehen, an die der Schaltungsträger und der Wellenleiter gekoppelt sind. Hierbei ist das erste Ende als erste stirnseitige Öffnung des Hohlleiters zur Kopplung an den Schaltungsträger und das zweite Ende als zweite stirnseitige Öffnung des Hohlleiters zur Kopplung an den Wellenleiter ausgeführt. Zusätzlich ist zwischen dem ersten und dem zweiten Ende des Halteelements, d.h. zwischen der ersten und der zweiten stirnseitigen Öffnung des Hohlleiters im Innenraum des Hohlleiters, eine Antennenanordnung aus zwei Dipolantennen vorgesehen, die überkreuzt und orthogonal zueinander angeordnet sind und somit eine dual polarisierte elektromagnetische Welle senden oder empfangen. Die Signalübertragung zwischen der Antennenanordnung und dem Schaltungsträger erfolgt über zwei überkreuzt zueinander angeordnete Leiterpaare, die mit den beiden Dipolantennen und mit zugehörigen Kontaktflächen auf dem Schaltungsträger verbunden sind. Zusätzlich ist am ersten Ende des Halteelements eine elektrische leitende Schicht befestigt, die die erste stirnseitige Öffnung des Hohlleiters abschließt.

Unter einem Schaltungsträger wird hierbei und im Folgenden entweder eine Leiterplatte, die mit Komponenten bzw. Bauelementen einer Elektronik, bevorzugt einer Hochfrequenz-Elektronik, bestückt ist, oder ein Substrat mit einer integrierten Elektronik, bevorzugt mit einer monolithisch oder hybrid integrierten Hochfrequenz-Elektronik, verstanden.

Unter einem Halteelement wird hierbei und im Folgenden ein Element verstanden, an dessen beiden Enden der Wellenleiter und der Schaltungsträger befestigt sind und somit der Wellenleiter und der Schaltungsträger voneinander beabstandet sind. Andererseits dient das Halteelement zur Ein- und Ausspeisung von mindestens einer elektromagnetischen Welle und eines zugehörigen differentiellen Signals in eine zwischen den beiden Enden befindliche Übertragungsstrecke.

Ein Hohlleiter ist ein in Längsrichtung hohl ausgeführter Körper, der entweder vollständig aus einem elektrischen leitenden Material oder nur an seiner Innenmantelfläche eine elektrisch leitende Beschichtung aufweist. Bevorzugt besitzt der Hohlleiter eine hohlzylindrische Ausformung mit einem kreisrunden Querschnittsprofil. Neben einem kreisrunden Querschnittsprofil kann auch ein quadratisches, rechteckförmiges, elliptisches oder jedes andere geeignete Querschnittsprofil vorliegen. Bei jedem dieser Querschnittsprofile kann anstelle eines massiven und geschlossenen Außenmantels auch eine Anordnung von im Außenmantelbereich in Längsrichtung des Hohlleiters parallel verlaufenden und voneinander beabstandeten stabförmigen Körpern vorliegen. Diese einzelnen stabförmigen Körper sind an mindestens einer Stelle entlang ihrer Längserstreckung jeweils über Verbindungsbereiche miteinander verbunden. Der Abstand zwischen zwei jeweils benachbarten stabförmigen Körpern ist hierbei jeweils so zu wählen, dass eine elektromagnetische Welle einer bestimmten Wellenlänge innerhalb der stabförmigen Körper geführt wird.

Der Hohlleiter führt somit neben seiner Befestigungsfunktion zusätzlich die Funktion der Führung einer elektromagnetischen Welle vorteilhaft durch.

Der Wellenleiter, der am zweiten Ende des Halteelements, d.h. an der zweiten stirnseitigen Öffnung des Hohlleiters, an das als Hohlleiter ausgeführte Halteelement gekoppelt ist, ist bevorzugt als dielektrischer Wellenleiter ausgebildet. Alternativ kann der Wellenleiter auch als ein weiterer Hohlleiter ausgebildet sein.

Jedes Leiterpaar aus jeweils zwei Einzelleitern überträgt jeweils ein differentielles Signal zur symmetrischen Ein- oder Ausspeisung der zugehörigen Dipolantenne. Somit wird das Leiterpaar auch als differentielles Leiterpaar verstanden. Jede einzelne Dipolantenne wandelt jeweils zwischen einer linear polarisierten elektromagnetischen Welle und einem zugehörigen Hohlleitersignal. Aufgrund der orthogonalen Anordnung können die beiden Dipolantennen in Kombination entweder eine dual polarisierte elektromagnetische Welle oder mindestens eine elliptisch bzw. zirkular polarisierte elektromagnetische Welle senden und empfangen.

Durch die am ersten Ende des Halteelements befestigte elektrisch leitende Schicht, die die erste stirnseitige Öffnung des als Hohlleiter ausgeführten Halteelements abschließt, erfolgt eine Totalreflexion der von den beiden Dipolantennen jeweils in Richtung des Schaltungsträgers abgestrahlten elektromagnetischen Welle. Auf diese Weise wird die Richtcharakteristik der Antennenanordnung aus den beiden Dipolantennen vorteilhaft verbessert.

Neben der Optimierung der Richtcharakteristik trägt die am ersten Ende des Halteelements befestigte elektrisch leitende Schicht zusätzlich auch zur Erhöhung der Bandbreite der Ein- und Auskoppelungsvorrichtung bei: Die elektrisch leitende Schicht bildet nämlich mit den beiden Dipolantennen jeweils eine zusätzliche kapazitiv wirkende Geometrie für den zwischen den beiden Dipolantennen und dem Schaltungsträger befindlichen Bereich der Übertragungsstrecke.

Durch eine geeignete Anordnung der einzelnen Dipolantennen in Relation zur elektrisch leitenden Schicht kann somit die kapazitiv wirkende Geometrie der Ein- und Auskopplungsvorrichtung gezielt verändert werden. Diese Veränderung der kapazitiv wirkenden Geometrie erzeugt eine Resonanz bei einer bestimmten Resonanzfrequenz. Die Impedanz der Übertragungsstrecke ist bei dieser Resonanzfrequenz näherungsweise reell und kann somit an die Impedanz des Wellenleiters und des Schaltungsträgers angepasst sein. In diesem Fall weist die Übertragungscharakteristik der Ein- und Auskopplungsvorrichtung bei dieser Resonanzfrequenz ein weiteres Maximum auf. Die Bandbreite der Ein- und Auskopplungsvorrichtung ist somit erfindungsgemäß um diese Resonanzfrequenz zusätzlich erhöht.

Vorteilhafte Ausgestaltungen und Weiterbildungen ergeben sich aus den weiteren Unteransprüchen sowie aus der Beschreibung unter Bezugnahme auf die Figuren der Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

In einer bevorzugten Erweiterung der Erfindung ist mindestens eine Dipolantenne jeweils als Patch-Antenne ausgeführt. Unter einer Patch-Antenne versteht man eine flächig ausgeführte Antenne, bevorzugt eine als viereckige Metallfläche ausgeführte Antenne, deren Längsseite eine Länge in Höhe der halben Wellenlänge der gesendeten oder empfangenen elektromagnetischen Welle aufweist.

In einer weiteren bevorzugten Erweiterung der Erfindung ist mindestens eine Dipolantenne jeweils als fraktale Patch-Antenne ausgeführt. Unter einer fraktalen Patch-Antenne versteht man eine Patch-Antenne, bei der jede Längsseite und/oder jede Ecke der rechteckförmigen Metallfläche derart in jedem Iterationsschritt modifiziert wird, dass sich an jede Längsseite bzw. an jede Ecke der im letzten Iterationsschritt jeweils hinzugekommenen viereckigen Metallflächen wiederum jeweils eine viereckige Metallfläche anschließt. Die Länge der Längsseite der sich neu anschließenden viereckigen Metallflächen ist jeweils gegenüber der Länge der Längsseite der im letzten Iterationsschritt jeweils neu entstandenen viereckigen Metallflächen um einen bestimmten Faktor reduziert. Dieser Faktor ist vom verwendeten Iterationsverfahren und vom verwendeten Flächentyp abhängig. Auf diese Weise sendet und empfängt eine derartige fraktale Patch-Antenne in jedem Iterationsschritt zusätzlich eine elektromagnetische Welle, deren Wellenlänge gegenüber der Wellenlänge der im letzten Iterationsschritt von der fraktalen Patch-Antenne neu gesendeten und empfangenen elektromagnetischen Welle um diesen Faktor reduziert ist. Somit erhöht sich die Bandbreite einer derartigen fraktalen Patch-Antenne in jedem Iterationsschritt um diesen Faktor.

In einer erfindungsgemäßen Erweiterung der Ein- und Auskopplungsvorrichtung ist der Abstand zwischen den beiden Dipolantennen und des ersten Endes des Halteelements abhängig von der Frequenz der in der Ein- und Auskopplungsvorrichtung übertragenen elektromagnetischen Welle eingestellt. In einer bevorzugten erfindungsgemäßen Erweiterung ist der Abstand 1 zwischen den beiden Dipolantennen und dem ersten Ende des Halteelements dann optimal eingestellt, wenn er der Gleichung (1) genügt. Hierbei ist n ein ganzzahliger Faktor:

$$l = \lambda/4 + n \cdot \lambda/2 \tag{1}$$

In diesem Fall kommt es vorteilhaft zu einer Kompensation der von den beiden Dipolantennen jeweils in Richtung des ersten Endes des Halteelements ausgestrahlten elektromagnetischen Wellen durch die an der elektrisch leitenden Schicht am ersten Ende jeweils reflektierten elektromagnetischen Wellen.

Beide Dipolantennen sind auf einer Trägermembran aufgebracht. Hierbei ist die Trägermembran in einem sich an das erste Ende anschließenden Bereich des Halteelements mit dem Halteelement verbunden. Die beiden Dipolantennen sind entweder auf einer zum ersten Ende des Halteelements gerichteten Stirnfläche der Trägermembran oder auf einer zum zweiten Ende des Halteelements gerichteten Stirnfläche der Trägermembran auf der Trägermembran angeordnet und befestigt. Auf diese Weise sind die beiden Dipolantennen in ihrer Anordnung und Orientierung zueinander wie auch zu den beiden Enden des Halteelements vorteilhaft mechanisch stabilisiert.

In einer zweiten Untervariante der Erfindung ist zur axialen Fixierung der Trägermembran am Hohlleiter an einer Innenmantelfläche des Hohlleiters in einem sich an die erste stirnseitige Öffnung anschließenden Bereich des Hohlleiters mindestens ein Steg derart ausgeformt, dass die Trägermembran daran anschlägt. Der hierfür nötige Anpressdruck von der Trägermembran auf den mindestens einen Steg erfolgt über die Verbindungen Hohlleiter - Schaltungsträger - Leiterpaare - Dipolantennen - Trägermembran.

In der zweiten Untervariante der Erfindung können die beiden Dipolantennen entweder auf der zur ersten stirnseitigen Öffnung gerichteten Stirnfläche oder auf der zur zweiten stirnseitigen Öffnung gerichteten Stirnfläche der Trägermembran angeordnet und befestigt sein.

In einer dritten Untervariante der Erfindung ist die Trägermembran in einer Vertiefung im Hohlleiter eingeklemmt. In der dritten Untervariante der Erfindung sind die beiden Dipolantennen auf der zur ersten stirnseitigen Öffnung gerichteten Stirnfläche angeordnet und befestigt. Außerdem ist in der dritten Untervariante die Trägermembran starr ausgeführt. Jedes Leiterpaar drückt in der dritten Untervariante gegen die beiden Antennenarme der zugehörigen Dipolantenne, um einen ausreichenden elektrischen und mechanischen Kontakt mit der zugehörigen Dipolantenne zu erzielen.

In einer vierten Untervariante der Erfindung, eine Sonderform der dritten Untervariante, ist die Trägermembran elastisch ausgeführt. Die Leiterpaare drücken in der vierten Untervariante der Erfindung derart auf die Antennenbereiche der zugehörigen Dipolantenne, dass einerseits ein ausreichender elektrischer und mechanischer Kontakt mit der zugehörigen Dipolantenne gewährleistet ist. Außerdem bewirkt das Andrücken der Leiterpaare an den zugehörigen Dipolantennen eine konkave Ausformung, bevorzugt eine wannenförmige Ausformung, der im Hohlleiter eingeklemmten Trägermembran innerhalb des Hohlleiters, bevorzugt im Bereich der beiden Dipolantennen. Unter einer wannenförmigen Ausformung wird hierbei und im Folgenden eine konkave Ausformung verstanden, die innerhalb des Hohlleiters, bevorzugt im Bereich der beiden Dipolantennen, eine der Form einer Wanne entsprechende Konkavität besitzt.

Neben der erfindungsgemäßen Ausprägung, in der die beiden Leiterpaare im Bereich zwischen den beiden zugehörigen Dipolantennen und der ersten stirnseitigen Öffnung des Hohlleiters einzig von der im Hohlleiter befindlichen Luft umgeben sind, ist auch eine weitere Ausprägung von der Erfindung mit abgedeckt, in der die beiden Leiterpaare in einer Signalleitung aus einem dielektrischen Material geführt sind.

Die Vertiefung, in der die Trägermembran in der dritten und vierten Untervariante jeweils eingeklemmt ist, weist eine laterale Erstreckung und eine der Dicke der Trägermembran entsprechende Breite auf. Somit bilden die beiden Stirnseiten der Vertiefung mit dem dielektrischen Material der Trägermembran eine kapazitiv wirkende Geometrie für eine von den beiden Dipolantennen jeweils radial abgestrahlte elektromagnetische Welle. Die Erstreckung der Stirnseiten der Vertiefung bildet für eine von den beiden Dipolantennen jeweils radial abgestrahlte elektromagnetische Welle eine induktiv wirkende Geometrie.

In Abhängigkeit einer Tiefe der Vertiefung, einer Dicke der Trägermembran und einer relativen Permittivität eines für die Trägermembran verwendeten dielektrischen Materials wird erfindungsgemäß eine reflexionsminimierte Übertragungscharakteristik der Ein- und Auskopplungsvorrichtung bei einer zugehörigen Resonanzfrequenz eingestellt.

In einer weiteren Ausführungsform der erfindungsgemäßen Ein- und Auskopplungsvorrichtung, die im Folgenden als zweite Ausführungsform bezeichnet wird, sind als weitere erfindungsgemäße technische Maßnahme zur Erhöhung der Bandbreite der dual polarisierten elektromagnetischen Welle mehrere axial aufeinanderfolgende Bereiche des Hohlleiters zwischen der zweiten stirnseitigen Öffnung und den beiden Dipolantennen jeweils mit einem zugehörigen Innendurchmesser, bevorzugt einem unterschiedlichen Innendurchmesser, und einer zugehörigen axialen Erstreckung, bevorzugt einer unterschiedlichen axialen Erstreckung, ausgeführt.

Durch eine entsprechende Auslegung des Innendurchmessers und der axialen Erstreckung jedes Bereiches kann erfindungsgemäß die kapazitiv und induktiv wirkende Geometrie des Hohlleiters in diesem Bereich geändert werden. Auf diese Weise lassen sich ebenfalls im Hohlleiter einzelne Resonanzen mit einer zugehörigen Resonanzfrequenz verwirklichen. Somit weist die kapazitiv und induktiv wirkende Geometrie des Hohlleiters für jeden Bereich jeweils ein weiteres Maximum der Übertragungscharakteristik bei der zugehörigen Resonanzfrequenz auf. Die Bandbreite der Ein- und Auskopplungsvorrichtung ist somit erfindungsgemäß um diese Resonanzfrequenzen zusätzlich erhöht.

In einer dritten Ausführungsform der erfindungsgemäßen Ein- und Auskopplungsvorrichtung ist im Bereich zwischen den beiden Dipolantennen und der zweiten stirnseitigen Öffnung des Hohlleiters an der Innenmantelfläche des Hohlleiters mindestens eine nach innen gerichtete Blende vorgesehen. An jeder Blende erfolgt jeweils eine Teilreflexion der von den beiden Dipolantennen in Richtung der zweiten stirnseitigen Öffnung des Hohlleiters jeweils abgestrahlten elektromagnetischen Welle. Jede Blende weist bevorzugt jeweils einen unterschiedlichen Abstand zu den beiden Dipolantennen, eine unterschiedliche Längserstreckung und eine unterschiedliche Quererstreckung auf. Hierbei vergrößert sich bevorzugt die Quererstreckung jeder einzelnen Blende mit zunehmendem Abstand zu den beiden Dipolantennen.

Gegenüber der wirkenden Geometrie des ursprünglichen Hohlleiterbereiches zwischen den beiden Dipolantennen und der zweiten stirnseitigen Öffnung verändert jede Blende durch ihre zugehörige Quererstreckung und Längserstreckung jeweils die kapazitiv wirkende Geometrie in diesem Hohlleiterabschnitt und durch ihren zugehörigen axialen Abstand zur nächsten Unstetigkeit im Hohlleiter - d.h. zur nächst gelegenen Blende bzw. zu den beiden Dipolantennen - die induktiv wirkende Geometrie in diesem Hohlleiterabschnitt. Durch eine geeignete geometrische Anordnung und eine geeignete Auslegung jeder einzelnen Blende kann somit jeweils ein zugehöriges Resonanzverhalten der zugehörigen Resonanzfrequenz im jeweiligen Hohlleiterabschnitt generiert werden. Auf diese Weise weist die wirkende Geometrie des Hohlleiters bei jeder Resonanzfrequenz jeweils ein weiteres Maximum in der Übertragungscharakteristik auf. Die Bandbreite des Hohlleiters ist somit erfindungsgemäß um diese zusätzlichen Resonanzfrequenzen erhöht.

In einer vierten Ausführungsform der erfindungsgemäßen Ein- und Auskopplungsvorrichtung ist im Bereich zwischen den beiden Dipolantennen und der zweiten stirnseitigen Öffnung des Hohlleiters mindestens ein elektrisch leitendes Element, bevorzugt mindestens ein metallisiertes Element, angeordnet. Bei dem elektrisch leitenden Element kann es sich um ein rotationssymmetrisches Element, beispielsweise eine Schraube oder ein Stift, oder um ein quaderförmiges Element, beispielsweise eine Platte oder ein Plättchen, oder um ein beliebig und geeignet geformtes Element handeln.

Jedes elektrisch leitende Element ist erfindungsgemäß jeweils hinsichtlich seiner Anordnung und seiner Geometrie so ausgelegt, dass es eine zugehörige filternd wirkende Geometrie des Hohlleiters für eine zwischen der ersten und der zweiten stirnseitigen Öffnung zu übertragende elektromagnetische Welle realisiert.

Schließlich ist in einer weiteren Ausprägung der Erfindung im Hohlleiterabschnitt zwischen der zweiten stirnseitigen Öffnung und den beiden Dipolantennen ein Bauelement zur Konversion zwischen mindestens einer elliptisch polarisierten elektromagnetischen Welle und mindestens einer linear polarisierten elektromagnetischen Welle angeordnet.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:

Fig. 1        eine dreidimensionale Darstellung einer erfindungsgemäßen Ein- und Auskopplungsvorrichtung,

Fig. 2A       eine Querschnittsdarstellung einer Ein- und Auskopplungsvorrichtung, nicht im Schutzumfang der Ansprüche inbegriffen ist,

Fig. 2B       eine Querschnittsdarstellung der fraktalen Dipolanordnung der erfindungsgemäßen Ein- und Auskopplungsvorrichtung,

Fig. 2C       eine Querschnittsdarstellung der Leiterpaare erfindungsgemäßen Ein- und Auskopplungsvorrichtung,

Fig. 3A       eine Querschnittsdarstellung einer zweiten Untervariante einer ersten Ausführungsform der erfindungsgemäßen Ein- und Auskopplungsvorrichtung,

Fig. 3B       eine Querschnittsdarstellung der fraktalen Dipolanordnung in der zweiten Untervariante der ersten Ausführungsform der erfindungsgemäßen Ein- und Auskopplungsvorrichtung,

Fig. 3C       eine Querschnittsdarstellung der Leiterpaare in der zweiten Untervariante der ersten Ausführungsform der erfindungsgemäßen Ein- und Auskopplungsvorrichtung,

Fig. 4A       eine Querschnittsdarstellung einer dritten Untervariante einer ersten Ausführungsform der erfindungsgemäßen Ein- und Auskopplungsvorrichtung,

Fig. 4B       eine Querschnittsdarstellung einer vierten Untervariante einer ersten Ausführungsform der erfindungsgemäßen Ein- und Auskopplungsvorrichtung,

Fig. 4C       eine Querschnittsdarstellung einer Vergrößerung der Leiterpaare in der vierten Untervariante einer ersten Ausführungsform der erfindungsgemäßen Ein- und Auskopplungsvorrichtung,

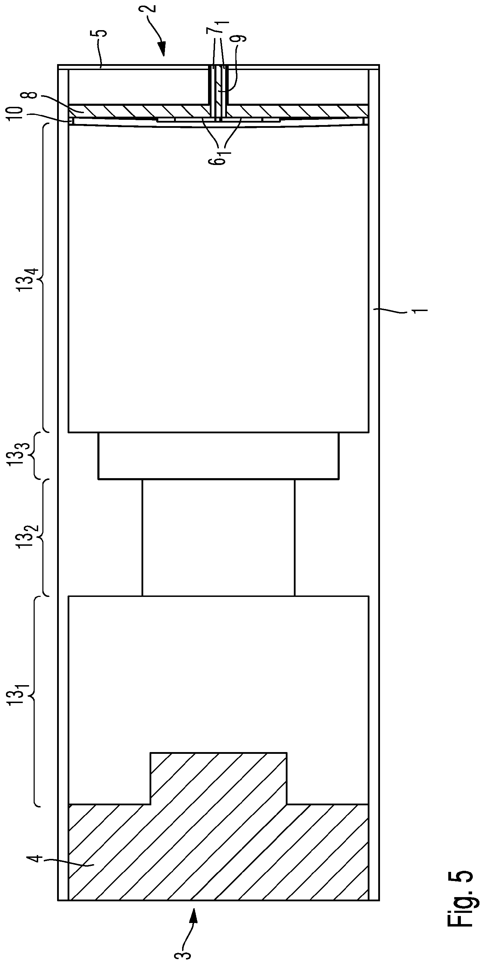

Fig. 5        eine Querschnittsdarstellung einer zweiten Ausführungsform der erfindungsgemäßen Ein- und Auskopplungsvorrichtung,

Fig. 6        eine Querschnittsdarstellung einer dritten Ausführungsform der erfindungsgemäßen Ein- und Auskopplungsvorrichtung,

Fig. 7      eine Querschnittsdarstellung einer vierten Ausführungsform der erfindungsgemäßen Ein- und Auskopplungsvorrichtung,

Fig. 8      eine Querschnittsdarstellung einer weiteren Ausprägung der erfindungsgemäßen Ein- und Auskopplungsvorrichtung,

Fig. 9A      eine spektrale Darstellung des Transmissionsfaktors bei der ersten Ausführungsform der erfindungsgemäßen Ein- und Auskopplungsvorrichtung und

Fig. 9B      eine spektrale Darstellung des Transmissionsfaktors bei einer Kombination der ersten und dritten Ausführungsform der erfindungsgemäßen Ein- und Auskopplungsvorrichtung.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

Im Folgenden werden die Figuren zusammenhängend und übergreifend beschrieben.

BESCHREIBUNG VON AUSFÜHRUNGSBEISPIELEN

Im Folgenden werden die einzelnen Ausführungsformen und die einzelnen Untervarianten der erfindungsgemäßen Ein- und Auskopplungsvorrichtung anhand der Figuren der Zeichnung im Detail erläutert:

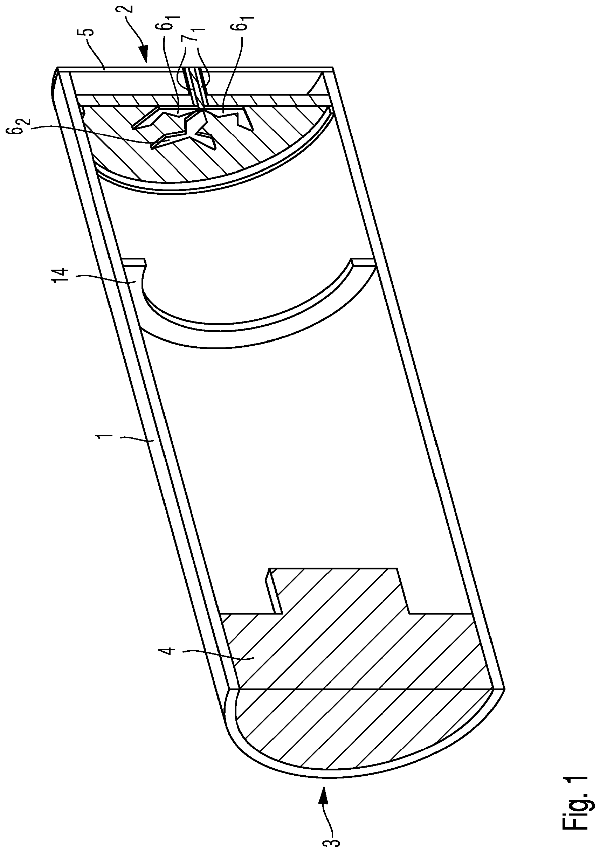

Fig. 1 zeigt eine dreidimensionale Darstellung einer bevorzugten Ausführungsform der erfindungsgemäßen Ein- und Auskopplungsvorrichtung zwischen einem Schaltungsträger und einem Wellenleiter, bevorzugt einem dielektrischen Wellenleiter.

Die Ein- und Auskopplungsvorrichtung wird bevorzugt mit einem Hohlleiter 1 realisiert, der bevorzugt zylindrisch ausgeformt ist. Neben einem zylindrischen Hohlleiter 1 mit einem kreisrunden Querschnittsprofil, das an das kreisrunde Querschnittsprofil des dielektrischen Wellenleiters angepasst ist, sind auch andere Querschnittsprofile, beispielsweise rechteckförmige, quadratische oder ellipsenförmigen Profile, von der Erfindung mit abgedeckt. Der Hohlleiter ist bevorzugt einteilig ausgebildet.

An einer ersten stirnseitigen Öffnung 2 ist der Hohlleiter 1 mit einem Schaltungsträger gekoppelt. An einer entgegengesetzten zweiten stirnseitigen Öffnung 3 erfolgt die Kopplung des Hohlleiters 1 mit einem Wellenleiter 4, bevorzugt einem dielektrischen Wellenleiter 4.

Der Schaltungsträger kann sowohl eine einlagige Leiterplatte oder eine mehrlagige Leiterplatte sein. Die Leiterplatte ist typischerweise mit üblichen Elementen bzw. Komponenten einer Elektronik, bevorzugt einer Hochfrequenz-Elektronik zum Senden und Empfangen eines Hochfrequenzsignals, bestückt. Alternativ kann der Schaltungsträger auch ein Substrat sein, in dem eine entsprechende Elektronik, bevorzugt eine entsprechende Hochfrequenzelektronik, in monolithischer oder hybrider Technologie integriert ist.

Beide Varianten eines Schaltungsträgers sind jeweils mit üblichen Befestigungstechniken, beispielsweise mittels Verschraubung, am Hohlleiter 1 im Bereich der ersten stirnseitigen Öffnung 2 mechanisch fixiert.

In einer bevorzugten Ausführung der Erfindung ist der Schaltungsträger so im Bereich der ersten stirnseitigen Öffnung 2 des Hohlleiters 1 angeordnet, dass eine elektrisch leitende Beschichtung, bevorzugt eine metallische Beschichtung, auf einer dem Hohlleiter 1 zugewandten Oberfläche des Schaltungsträgers eine elektrisch leitende Schicht 5 in der ersten stirnseitigen Öffnung 2 des Hohlleiters 1 bildet. Alternativ kann die elektrisch leitende Schicht 5 in der ersten stirnseitigen Öffnung 2 auch eine separate und vom Schaltungsträger losgelöste Schicht bzw. schichtförmige Scheibe sein. In diesem Fall befindet sich der Schaltungsträger auf einer vom Hohlleiter 1 abgewandten Seite der elektrisch leitenden Schicht 5 in einer unmittelbaren Nähe zu dieser elektrisch leitenden Schicht 5.

Der Wellenleiter 4, bevorzugt der dielektrische Wellenleiter 4, ist, wie in Fig. 1 angedeutet ist, bevorzugt passgenau in der zweiten stirnseitigen Öffnung 3 in den Hohlleiter 1 eingeführt. Zur Impedanz- und Feldtypanpassung zwischen dem Wellenleiter 4 und dem Hohlleiter 1 ist das dem Hohlleiter 1 zugewandte Ende des Wellenleiters 4, wie durch die Stufe des Wellenleiters 4 in Fig. 1 angedeutet ist, in jeder technisch sinnvollen Form getapert ausgeführt.

In einem sich an die erste stirnseitige Öffnung 2 anschließenden Bereich des Hohlleiters 1 sind die beiden Dipolantennen $6_1$ und $6_2$ angeordnet. Die beiden Dipolantennen $6_1$ und $6_2$ sind jeweils in einer gleichen axialen Position innerhalb des Hohlleiters 1 überkreuzt und in einer orthogonalen Orientierung zueinander angeordnet. Die beiden Antennenarme der beiden Dipolantennen sind dabei jeweils in einem rechten Winkel zur Längsachse des Hohlleiters 1 orientiert.

Die beiden Antennenarme der beiden Dipolantennen $6_1$ und $6_2$ sind jeweils mit einem Leiterpaar 71 und $7_2$ elektrisch und mechanisch verbunden. Somit sind die beiden Leiterpaare 71 und $7_2$ jeweils mit ihren beiden Einzelleitern ebenfalls zueinander überkreuzt angeordnet. Die beiden Leiterpaare 71 und $7_2$ erstrecken sich jeweils von den beiden Antennenarmen der beiden Dipolantennen $6_1$ und $6_2$ bis zu den zugehörigen Kontaktflächen auf dem Schaltungsträger.

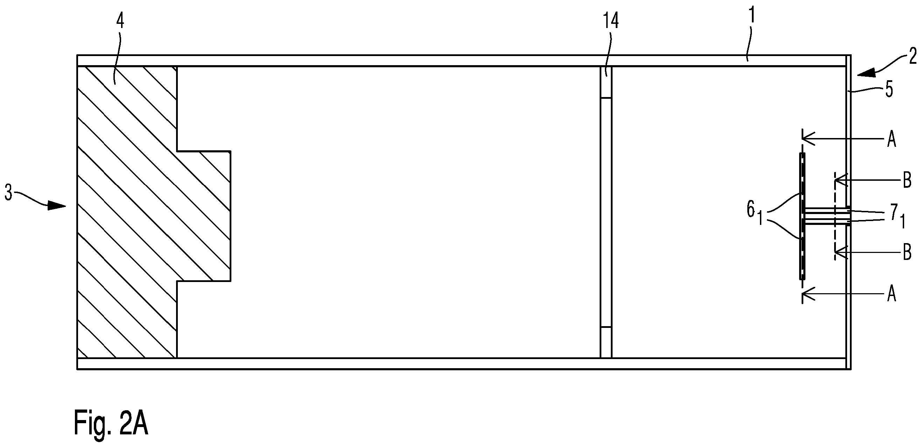

Wie aus der Querschnittsdarstellung der Ein- und Auskopplungsvorrichtung in Fig. 2A hervorgeht, die nicht Schutzumfang der Ansprüche inbegriffen ist, sind sowohl die beiden Dipolantennen $6_1$ und $6_2$ als auch die zugehörigen Leiterpaare 71 und $7_2$ frei im Innenraum des Hohlleiters 1 geführt und angeordnet.

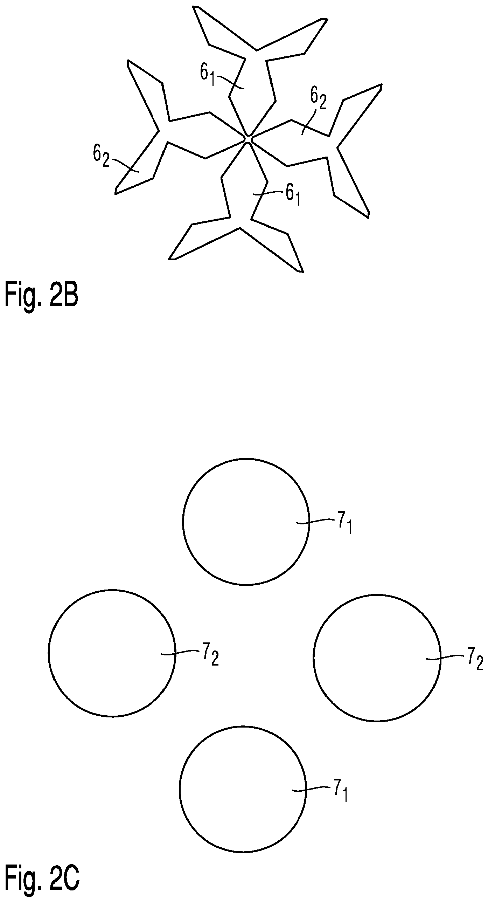

Die beiden Dipolantennen $6_1$ und $6_2$ sind, wie aus Fig. 2B hervorgeht, jeweils als fraktale Dipolantennen realisiert. Jeder Antennenarm ist hierbei jeweils als viereckförmige Antennenfläche in der Form einer Raute realisiert, die jeweils an einer ihrer Ecken jeweils um zwei weitere viereckförmige Antennenflächen erweitert ist. Während die erstgenannten viereckförmigen Antennenflächen jeweils eine Seitenlänge in Höhe der viertel Wellenlänge der in der Dipolantenne $6_1$ und $6_2$ jeweils gesendeten oder empfangenen elektromagnetischen Welle aufweisen, entspricht die Seitenlänge der jeweils erweiterten viereckförmigen Antennenflächen einer gegenüber der halben Wellenlänge um einen bestimmten Faktor reduzierten Wellenlänge. Die Anzahl der Iterationsstufen in der Erweiterung jeder einzelnen rechteckförmigen Antennenfläche in der fraktalen Dipolantenne ist nicht auf den Faktor eins beschränkt, sondern kann jede beliebige, technisch sinnvolle Anzahl von Iterationsstufen enthalten. In jeder Iterationsstufe wird jeweils die Bandbreite der fraktalen Dipolantenne gemäß diesem bestimmten Faktor erhöht. Die iterative Erweiterung jeder der beiden Dipolantennen $6_1$ und $6_2$ kann auch, soweit es technisch sinnvoll ist, an mehreren Ecken der einzelnen viereckförmigen Antennenfläche erfolgen. Schließlich kann die iterative Erweiterung auch an einer Seitenlinie oder an mehreren Seitenlinien der einzelnen viereckförmigen Antennenfläche vorliegen. Anstelle einer rautenförmigen Antennenfläche kann auch eine quadratische oder beliebig geformte Antennenfläche vorliegen.

Aus Fig. 2C geht die überkreuzte Anordnung der beiden Leiterpaare 71 und $7_2$ hervor, die eine symmetrische Speisung jeder Dipolantenne $6_1$ und $6_2$ mit jeweils einem zugehörigen differenziellen Hochfrequenzsignal oder eine symmetrische Weiterleitung des empfangenen differenziellen Hochfrequenzsignals ermöglichen. Die beiden Leiterpaare $7_1$ und $7_2$ sind in Analogie zur orthogonalen Anordnung der beiden Dipolantennen $6_1$ und $6_2$ ebenfalls orthogonal zueinander orientiert.

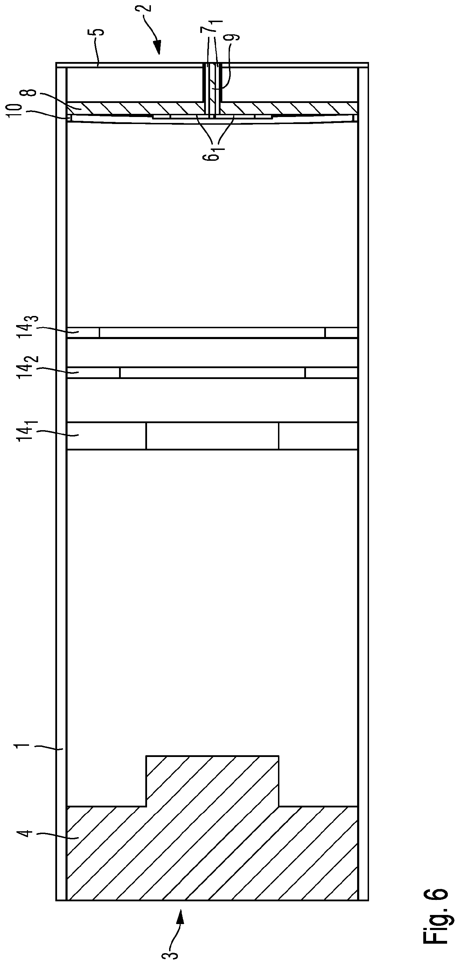

Fig. 1 und 2A zeigen jeweils eine ringförmige und radial nach innen gerichtete Blende an der Innenmantelfläche des Hohlleiters 1 in einem Bereich zwischen den beiden Dipolantennen $6_1$ und $6_2$ und der zweiten stirnseitigen Öffnung 3 des Hohlleiters 1. Diese ringförmige und radial nach innen gerichtete Blende wird weiter unten bei der Beschreibung der dritten Ausführungsform der erfindungsgemäßen Ein- und Auskopplungsvorrichtung gemäß Fig. 6 noch im Detail erläutert.

Durch die beiden Dipolantennen $6_1$ und $6_2$ wird jeweils eine linear polarisierte elektromagnetische Welle gesendet oder empfangen. Aufgrund der orthogonalen Orientierung der beiden Dipolantennen $6_1$ und $6_2$ im Hohlleiter 1 weisen die beiden gesendeten elektromagnetischen Wellen eine zueinander orthogonale Polarisationsebene auf. Bei geeigneter Speisung wird eine dual polarisierte elektromagnetische Welle erzeugt. Alternativ kann auch mindestens eine elliptisch bzw. zirkular polarisierte elektromagnetische Welle erzeugt werden. Umgekehrt kann durch die beiden Dipolantennen $6_1$ und $6_2$ eine dual polarisierte elektromagnetische Welle, d.h. zwei linear polarisierte elektromagnetische Wellen mit jeweils zueinander orthogonalen Polarisationsebenen, eindeutig empfangen werden. Alternativ kann auch mindestens eine elliptisch bzw. zirkular polarisierte elektromagnetische Welle empfangen werden. Schließlich ermöglichen die beiden Dipolantennen $6_1$ und $6_2$ den eindeutigen Empfang einer einzigen linear polarisierten elektromagnetischen Welle, deren Polarisationsebene unterschiedlich zu den Orientierungen der beiden Dipolantennen $6_1$ und $6_2$ oder in den Orientierungen der beiden Dipolantennen $6_1$ und $6_2$ gerichtet ist.

Der frequenzabhängige Betrag des Transmissionsfaktors $S_{21}$ einer erfindungsgemäßen Ein- und Auskopplungsvorrichtung, wie sie in der Figur 1 dargestellt ist, weist vier Maxima auf:
Ein Maximum im Spektralverlauf des Betrags des Transmissionsfaktors $S_{21}$ entspricht der Frequenz der dual polarisierten elektromagnetischen Welle, die von einer nicht fraktal ausgeführten Dipolantennenanordnung abgestrahlt wird. Durch die fraktale Struktur der beiden Dipolantennen $6_1$ und $6_2$, die jeweils nur in einem einzigen Iterationsschritt erweitert wurde, kommt ein weiteres Maximum beim Spektralverlauf des Betrags des Transmissionsfaktors $S_{21}$ hinzu. Ein weiteres Maximum im Spektralverlauf des Betrags des Transmissionsfaktors $S_{21}$ resultiert aus der ringförmigen und radial nach innen gerichteten Blende, wie weiter unten bei der Beschreibung zu Fig. 6 im Detail noch erklärt wird.

Ein viertes Maximum im Spektralverlauf des Betrags des Transmissionsfaktors $S_{21}$ resultiert schließlich aus der Anordnung der beiden Dipolantennen $7_1$ und $7_2$ relativ zur elektrisch leitenden Schicht 5 in der ersten stirnseitigen Öffnung 2 des Hohlleiters 1.

Die beiden metallischen Dipolantennen $7_1$ und $7_2$ bilden zusammen mit der metallischen Schicht 5 in der ersten stirnseitigen Öffnung 2 eine kapazitiv wirkende Geometrie, die bei entsprechender geometrischer Auslegung und bei entsprechendem Abstand zueinander die Übertragungscharakteristik des ursprünglichen Hohlleiters 1 verändert. Bei geeigneter Auslegung der Geometrien und der Abstände dieser genannten Elemente - Dipolantennen und metallische Schicht - kann zusätzlich im Hohlleiter 1 eine Resonanz bei einer Resonanzfrequenz erzeugt werden, die der Frequenz des vierten Maximums im Spektralverlauf des Betrags des Transmissionsfaktors $S_{21}$ entspricht.

Bei der Auslegung des Abstandes zwischen den beiden Dipolantennen $7_1$ und $7_2$ und der ersten stirnseitigen Öffnung 2 des Hohlleiters 1 ist zu berücksichtigen, dass dieser bevorzugt einen Wert gemäß Gleichung (1) aufweist. In diesem Falle kommt es zu einer konstruktiven Überlagerung der von den beiden Dipolantennen $6_1$ und $6_2$ in Richtung der ersten stirnseitigen Öffnung 2 jeweils abgestrahlten elektromagnetischen Welle durch die zugehörige an der metallischen Schicht 5 total reflektierten elektromagnetischen Welle. Auf diese Weise wird zusätzlich die Richtcharakteristik der Antennenanordnung verbessert.

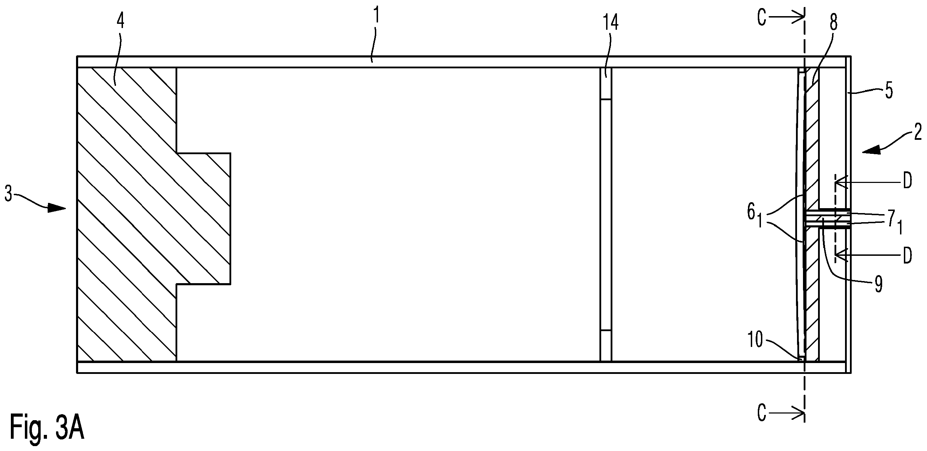

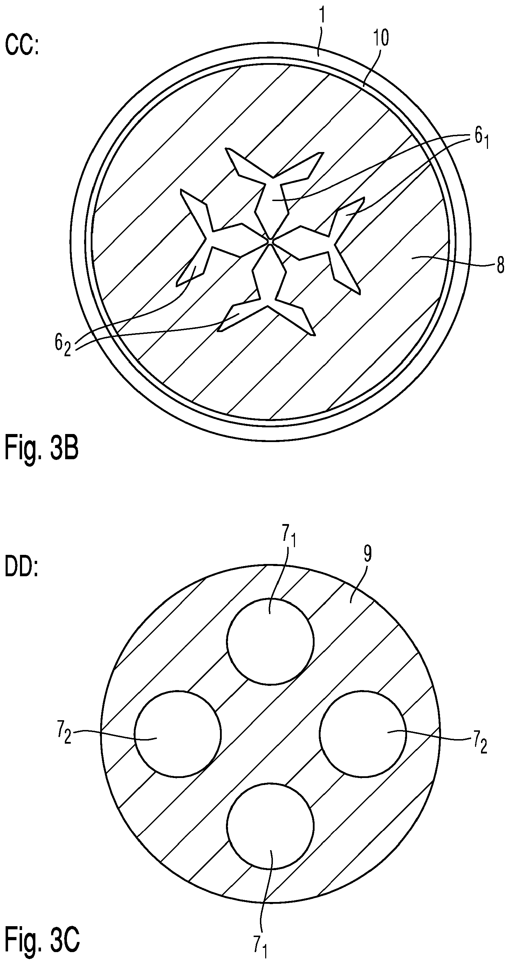

Aus den Figuren 3A, 3B und 3C geht eine weitere Untervariante - eine zweite Untervariante - der ersten Ausführungsform der erfindungsgemäßen Ein- und Auskopplungsvorrichtung hervor:

Bei der zweiten Untervariante sind die beiden Dipolantennen $6_1$ und $6_2$ zumindest mit ihren beiden orthogonal zur Längsachse des Hohlleiters 1 orientierten Antennenarmen auf einer Trägermembran 8 angeordnet und befestigt. Unter einer Trägermembran wird hierbei und im Folgenden ein aus einem dielektrischen Material hergestellter plattenförmiger Körper mit zwei Stirnflächen verstanden. Das dielektrische Material ist im Fall der zweiten Untervariante der Erfindung ein starres Material. Eine der beiden Stirnflächen dient dabei zur Anordnung und zur Befestigung der beiden Dipolantennen $6_1$ und $6_2$.

Die Anordnung der beiden Dipolantennen $6_1$ und $6_2$ auf der Trägermembran 8 erfolgt in der zweiten Untervariante entweder auf der Stirnseite der Trägermembran 8, die in Richtung der ersten stirnseitigen Öffnung 2 des Hohlleiters 1 gerichtet ist, oder auf der Stirnseite der Trägermembran 8, die in Richtung der zweiten stirnseitigen Öffnung 3 des Hohlleiters 1 gerichtet ist. Die Trägermembran 8 ist üblicherweise aus einem dielektrischen Material, beispielsweise FR4 oder Siliziumoxid, hergestellt. Die Befestigung der beiden Dipolantennen $6_1$ und $6_2$ auf der Trägermembran 8 kann hierbei mit gängigen Fertigungstechnologien, beispielsweise mittels Aufbautechnologie oder Klebung, erfolgen.

Die beiden Leiterpaare $7_1$ und $7_2$ sind in der zweiten Untervariante axial durch die Trägermembran 8 hindurchgeführt, falls die Dipolantennen auf der Stirnfläche der Trägermembran 8 aufgebracht sind, die in Richtung der zweiten stirnseitigen Öffnung 3 des Hohlleiters 1 gerichtet ist. Zur besseren Führung der beiden Leiterpaare $7_1$ und $7_2$ im Hohlleiter 1 sind die beiden Einzelleiter der beiden differenziellen Leiterpaare $7_1$ und $7_2$, wie insbesondere aus Fig. 3C hervorgeht, in einer Signalleitung 9 aus einem geeigneten dielektrischen Material eingefügt. Die Einzelleiter der beiden differenziellen Leiterpaare $7_1$ und $7_2$ werden durch ihre Einfügung in das Isolationsmaterial der Signalleitung 9 zusätzlich mechanisch stabilisiert, indem der Außendurchmesser des Signalleitung 1 an den Innendurchmesser der axialen Durchführung in der Trägermembran 8 bzw. in der metallischen Schicht 5 angepasst ist. Die dielektrische Signalleitung 9 in der zweiten Untervariante ermöglicht gegenüber der ersten Untervariante eine bessere elektrische Isolierung der beiden Leiterpaare $7_1$ und $7_2$ gegenüber der metallischen Schicht 5.

Die mechanische Fixierung der Trägermembran 8 am Hohlleiter 1 erfolgt in der zweiten Untervariante über mindestens einen an der Innenoberfläche des Hohlleiters 1 ausgeformten Steg 10, an den die Trägermembran mit ihrer Stirnfläche anschlägt. Hierzu ist die axiale Erstreckung des Signalleitung 9 derart ausgelegt, dass die mit den Kontaktflächen des Schaltungsträgers und gleichzeitig mit den Dipolantennen $6_1$ und $6_2$ und damit mit der Trägermembran 8 verbundene Signalleitung 9 einen ausreichenden Kontaktdruck von der Trägermembran 8 auf den mindestens einen Steg 10 ausübt. Der mindestens eine Steg 10 kann als ein einziger ringförmiger Steg oder als eine Kombination von mehreren, über jeweils ein Winkelsegment des Hohlleiters 1 sich erstreckende Stege ausgeführt sein.

Der Abstand zwischen den beiden Dipolantennen $6_1$ und $6_2$ und der ersten stirnseitigen Öffnung 2 des Hohlleiters 1 ist in der zweiten Untervariante ebenfalls bevorzugt gemäß Gleichung (1) auszulegen.

In der zweiten Untervariante der ersten Ausführungsform ist bei der Auslegung der Resonanzfrequenz für das vierte Maximum im Spektralverlauf des Betrags des Transmissionsfaktors $S_{21}$ die relative Permittivität des dielektrischen Materials der Trägermembran 8' und der Signalleitung 9 zu berücksichtigen.

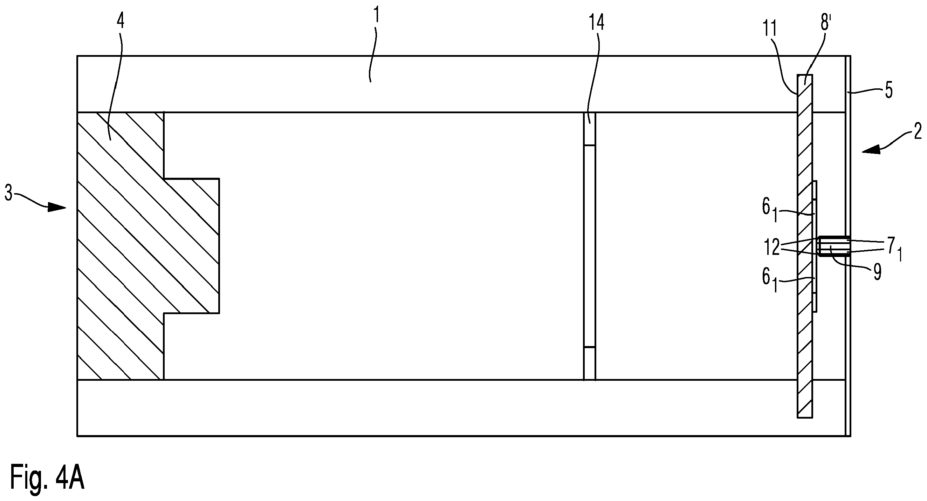

In der dritten Untervariante der ersten Ausführungsform der erfindungsgemäßen Ein- und Auskopplungsvorrichtung ist die Trägermembran 8' zwischen zwei Teilbereichen des Hohlleiters 1 in einer radialen Vertiefung 11, bevorzugt einer nutförmigen Vertiefung, an der Innenmantelfläche des Hohlleiters 1 eingeklemmt. Hierzu ist die Trägermembran 8' der dritten Untervariante, wie aus Fig. 4A ersichtlich ist, gegenüber der Trägermembran 8 der zweiten Untervariante verlängert. Diese Verlängerung der Trägermembran 8' und die zugehörige radiale Vertiefung 11 sind bevorzugt gemäß Gleichung (1) auszulegen. Eine von den beiden Dipolantennen $6_1$ und $6_2$ jeweils radial abgestrahlte elektromagnetische Welle wird nämlich am radialen Ende der radialen Vertiefung 11 total reflektiert. Die total reflektierte elektromagnetische Welle kompensiert auf diese Weise die radial abgestrahlte elektromagnetische Welle vollständig. Durch diese technische Maßnahme wird somit zusätzlich die Richtcharakteristik der Antennenanordnung optimiert.

Die beiden Dipolantennen $6_1$ und $6_2$ sind in der dritten Untervariante gemäß Fig. 4A auf einer Stirnfläche der Trägermembran 8' angeordnet und befestigt, die in Richtung der ersten stirnseitigen Öffnung 2 des Hohlleiters 1 gerichtet ist. Auf diese Weise sind die beiden Leiterpaare $7_1$ und $7_2$ bzw. eine die beiden Leiterpaare $7_1$ und $7_2$ enthaltende Signalleitung 9 nicht mehr durch die Trägermembran 8' zu führen. Die Trägermembran 8' der dritten Untervariante ist ebenso wie die Trägermembran 8 der zweiten Untervariante aus einem starren dielektrischen Material hergestellt. Die

beiden Leiterpaare $7_1$ und $7_2$ drücken mit ihren stirnseitigen Köpfen 12 jeweils derart gegen die zugehörigen Antennenbereiche der beiden Dipolantennen $6_1$ und $6_2$, dass ein ausreichender elektrischer und mechanischer Kontakt zwischen den Antennenarmen der beiden Dipolantennen $6_1$ und $6_2$ und den zugehörigen Leiterpaaren $7_1$ und $7_2$ entsteht.

Die beiden gegenüberliegenden Stirnseiten der im Hohlleiter 1 für die Einklemmung der Trägermembran 8' vorgesehenen Nut 11 verändert zusammen mit dem dielektrischen Material der verlängerten Trägermembran 8' die Übertragungscharakteristik des ursprünglichen Hohlleiters 1. Die Radialerstreckung der im Hohlleiter 1 für die Einklemmung der Trägermembran 8' vorgesehenen Nut 11 ändert zusätzlich die Übertragungscharakteristik des ursprünglichen Hohlleiters 1. Durch eine geeignete geometrische Auslegung der Nut 11 und durch eine geeignete Wahl des dielektrischen Materials der Trägermembran 8' können somit erfindungsgemäß eine zusätzliche Resonanz bei einer weiteren Resonanzfrequenz erzeugt werden, die zu einem weiteren Maximum, einem fünften Maximum, im Spektralverlauf des Betrags des Transmissionsfaktors $S_{21}$ führt. Auf diese Weise ist eine zusätzliche Erhöhung der Bandbreite der erfindungsgemäßen Ein- und Auskopplungsvorrichtung möglich.

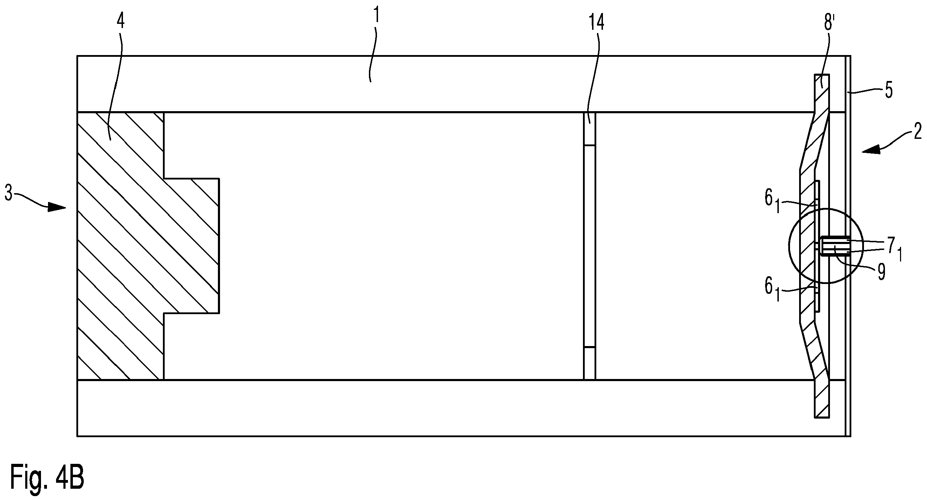

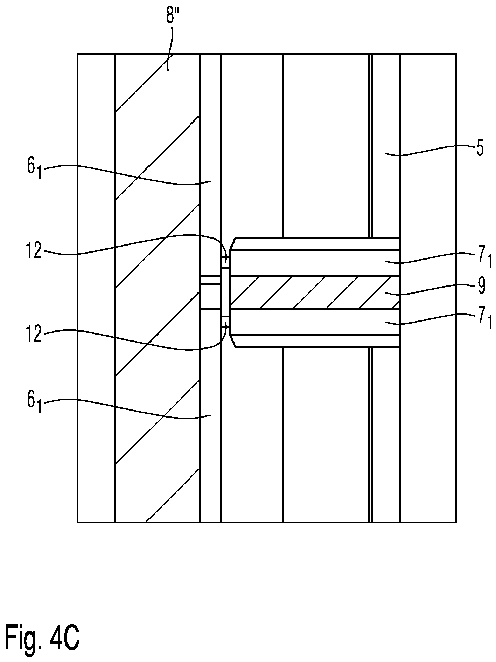

Aus den Figuren 4B und 4C geht eine vierte Untervariante der ersten Ausführungsform der erfindungsgemäßen Ein- und Auskopplungsvorrichtung hervor:

In der vierten Untervariante sind die beiden Dipolantennen $6_1$ und $6_2$ wie in der dritten Untervariante auf der Stirnfläche der Trägermembran 8" angeordnet und befestigt, die in Richtung der ersten stirnseitigen Öffnung 2 des Hohlleiters 1 gerichtet ist. Die beiden Leiterpaare $7_1$ und $7_2$, die jeweils mit den beiden Antennenarmen der beiden Dipolantennen $6_1$ und $6_2$ und mit der zugehörigen Kontaktfläche des Schaltungsträgers in Kontakt stehen, sind somit nicht durch die Trägermembran 8" geführt.

Die Trägermembran 8" der dritten Untervariante ist aus einem elastischen dielektrischen Material hergestellt. Die axiale Erstreckung der beiden Leiterpaare $7_1$ und $7_2$ sowie der Signalleitung 9 sind so gewählt, dass die Einzelleiter der beiden Leiterpaare $7_1$ und $7_2$ mit ihren stirnseitigen Köpfen 12 jeweils derart gegen die zugehörigen Antennenbereiche der beiden Dipolantennen $6_1$ und $6_2$ drücken, dass die elastische Trägermembran 8" verformt wird. Die Trägermembran 8" nimmt hierbei eine konkave Ausformung, bevorzugt eine wannenförmige Ausformung, in Richtung der zweiten stirnseitigen Öffnung 3 an. Hierbei können die Dipolantennen $6_1$ und $6_2$ im Bereich des Wannenbodens der wannenförmigen Ausformung der Trägermembran 8" zu liegen kommen, falls für die Dipolantennen $6_1$ und $6_2$ ein vergleichsweise starres Material verwendet wird. Bei Verwendung eines vergleichsweise elastischen Materials für die beiden Dipolantennen $6_1$ und $6_2$ können die beiden Dipolantennen $6_1$ und $6_2$ zumindest teilweise auch im Bereich der Wannenwände der wannenförmigen Ausformung der Trägermembran 8" liegen.

In einer zweiten Ausführungsform der erfindungsgemäßen Ein- und Auskopplungsvorrichtung weist der Hohlleiter zwischen den beiden Dipolantennen $6_1$ und $6_2$ und der zweiten stirnseitigen Öffnung 3 des Hohlleiters 1 mehrere Bereiche $13_1$, $13_2$, $13_3$ und $13_4$ auf, die jeweils einen zugehörigen Innendurchmesser, eine zugehörige axiale Erstreckung und einen zugehörigen Abstand zu den beiden Dipolantennen $6_1$ und $6_2$ aufweisen. Die drei Parameter Innendurchmesser, axiale Erstreckung und Abstand zu den Dipolantennen können zwischen den einzelnen Bereichen $13_1$, $13_2$, $13_3$ und $13_4$ vollständig oder nur teilweise unterschiedlich sein.

Durch eine geeignete Parametrierung des Innendurchmessers und der axialen Erstreckung im jeweiligen Bereich kann die kapazitiv und induktiv wirkende Geometrie im jeweiligen Bereich gegenüber der kapazitiv und induktiv wirkenden Geometrie des ursprünglichen Hohlleiters 1 geändert werden. Auf diese Weise lassen sich für jeden dieser Bereiche $13_1$, $13_2$, $13_3$ und $13_4$ jeweils eine zusätzliche Resonanz bei der zugehörigen Resonanzfrequenz im Hohlleiter 1 erzeugen. Diese zusätzlichen Resonanzen mit den zugehörigen Resonanzfrequenzen führen jeweils zu zusätzlichen Maxima im Spektralverlauf des Betrags des Transmissionsfaktors $S_{21}$ bei diesen Resonanzfrequenzen. Auf diese Weise kann die Bandbreite der erfindungsgemäßen Ein- und Auskopplungsvorrichtung vorteilhaft zusätzlich erweitert werden.

In einer dritten Ausführungsform der erfindungsgemäßen Ein- und Auskopplungsvorrichtung gemäß Fig. 6 ist an der Innenmantelfläche des Hohlleiters 1 zwischen den beiden Dipolantennen $6_1$ und $6_2$ und der zweiten stirnseitigen Öffnung 3 des Hohlleiters 1 mindestens eine ringförmige und radial nach innen gerichtete Blende $14_1$, $14_2$ und $14_3$, bevorzugt mehrere ringförmige und radial nach innen gerichtete Blenden $14_1$, $14_2$ und $14_3$, ausgeformt. An den Blenden kommt es jeweils zu einer Teilreflexion der in Richtung der zweiten stirnseitigen Öffnung 3 abgestrahlten elektromagnetischen Welle.

Die einzelnen Blenden weisen jeweils eine zugehörige radiale Erstreckung, eine zugehörige axiale Erstreckung und einen zugehörigen axialen Abstand zur Blende, die in Richtung der ersten stirnseitigen Öffnung 2 jeweils nächst benachbart ausgeformt ist, bzw. zu den beiden Dipolantennen $6_1$ und $6_2$ auf. Somit verändert jede einzelne Blende $14_1$, $14_2$ und $14_3$ über ihre zugehörige radiale und axiale Erstreckung die kapazitiv wirkende Geometrie des ursprünglichen Hohlleiters 1 innerhalb ihrer zugehörigen axialen Erstreckung. Außerdem verändert jede einzelne Blende $14_1$, $14_2$ und $14_3$ über ihren axialen Abstand zur nächst gelegenen Blende bzw. zu den beiden Dipolantennen $6_1$ und $6_2$ die induktiv wirkende Geometrie des Hohlleiters 1.

Über eine geeignete Dimensionierung der Parameter radiale Erstreckung, axiale Erstreckung und axialer Abstand können somit erfindungsgemäß für jede einzelne Blende $14_1$, $14_2$ und $14_3$ jeweils eine zusätzliche Resonanz bei der zugehörigen Resonanzfrequenz im Hohlleiter 1 erzeugt werden.

Diese zusätzlichen Resonanzen mit den zugehörigen Resonanzfrequenzen führen ebenfalls jeweils zu zusätzlichen Maxima im Spektralverlauf des Betrags des Transmissionsfaktors $S_{21}$ bei diesen Resonanzfrequenzen. Auf diese Weise kann die Bandbreite der erfindungsgemäßen Ein- und Auskopplungsvorrichtung vorteilhaft zusätzlich erweitert werden.

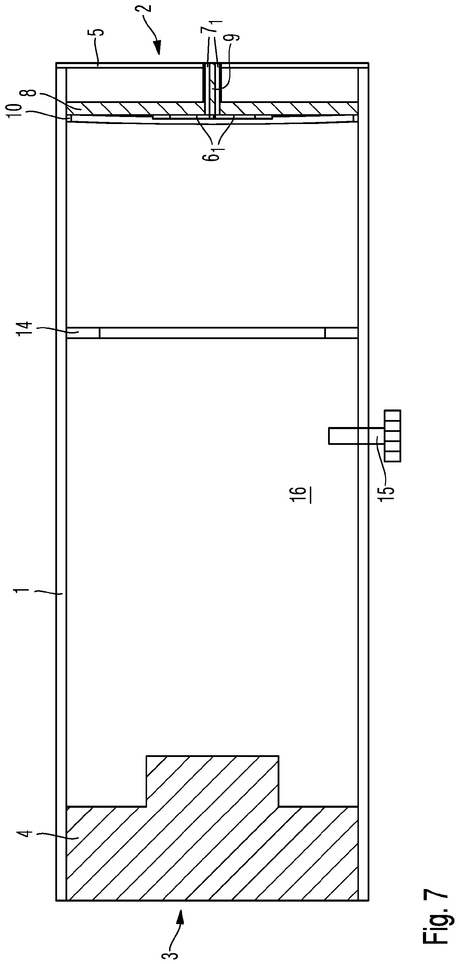

In einer vierten Ausführungsform der erfindungsgemäßen Ein- und Auskopplungsvorrichtung gemäß Fig. 7 ist an der Innenmantelfläche des Hohlleiters 1 zwischen der zweiten stirnseitigen Öffnung 3 und den beiden Dipolantennen $6_1$ und $6_2$ mindestens ein elektrisch leitendes Element 15, bevorzugt mindestens ein metallisches Element 15, angeordnet. Dieses elektrisch leitende Element 15 ragt an der Innenmantelfläche des Hohlleiters 1 in den Innenraum 16 des Hohlleiters 1 hinein und ist in einem zugehörigen axialen Abstand von den beiden Dipolantennen $6_1$ und $6_2$ beabstandet.

Bei dem elektrisch leitenden Element 15 kann es sich um einen rotationssymmetrischen Körper, beispielsweise um eine Schraube wie in Fig. 7 oder um einen Stift, oder um einen quaderförmigen Körper, beispielsweise eine Platte oder ein Plättchen, oder um einen beliebig geformten Körper handeln. Die Befestigung dieses elektrisch leitenden Elements 15 am Hohlleiter 1 erfolgt durch bekannte Befestigungstechniken, beispielsweise mittels Schraubung. Die radiale Erstreckung des elektrisch leitenden Elements 15 kann entweder konstant oder über eine entsprechende Motorik veränderlich einstellbar sein.

Das elektrisch leitende Element 15 verändert über seine zugehörige Geometrie und seinen axialen Abstand zu einem weiteren elektrisch leitenden Element bzw. zu den beiden Dipolantennen $6_1$ und $6_2$ die kapazitiv und die induktiv wirkende Geometrie des ursprünglichen Hohlleiters 1. Auf diese Weise kann bei entsprechender Ausformung und Positionierung jedes einzelnen elektrisch leitenden Elements 15 mit jedem einzelnen elektrisch leitenden Element 15 jeweils eine zugehörige filternde Wirkung auf das Übertragungsverhalten des Hohlleiters 1 erzielt werden. Hierbei können sowohl der jeweilige Filtertyp - Hochpassfilter, Bandpassfilter oder Bandsperre-Filter - wie auch die zugehörigen Filterparameter - Mittenfrequenz, Bandbreite oder Grenzfrequenz - jeweils eingestellt werden.

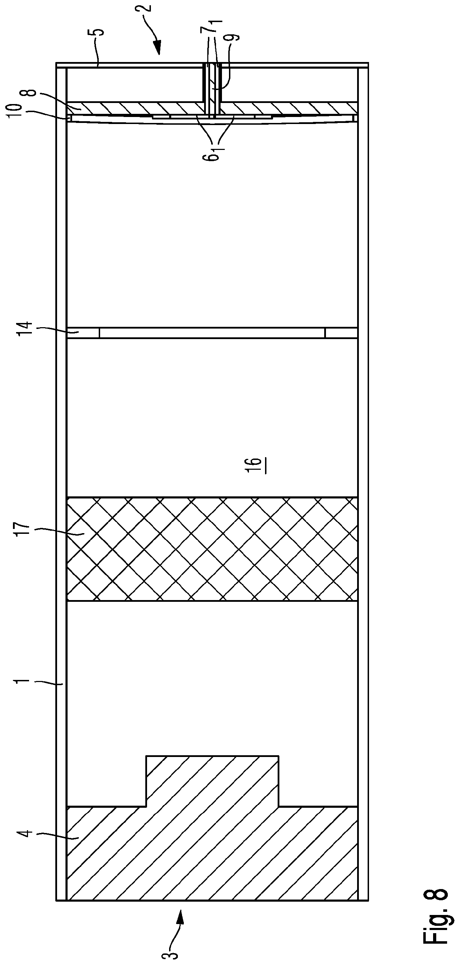

In einer weiteren Ausprägung der erfindungsgemäßen Ein- und Auskopplungsvorrichtung gemäß Fig. 8 ist im Innenraum 16 des Hohlleiters 1 bevorzugt passgenau ein Bauelement 17 zur Konversion zwischen mindestens einer elliptisch polarisierten elektromagnetischen Welle und mindestens einer linear polarisierten elektromagnetischen Welle eingefügt. Dieses Bauelement 17 zur Konversion ist bevorzugt zwischen der zweiten stirnseitigen Öffnung 3 und allen im Hohlleiter 1 jeweils vorgesehenen Blenden 14, $14_1$, $14_2$ und $14_3$ positioniert.

Dieses Bauelement 17 zur Konversion zwischen mindestens einer elliptisch polarisierten elektromagnetischen Welle und mindestens einer linear polarisierten elektromagnetischen Welle führt bevorzugt eine Phasenverschiebung zwischen zwei linear polarisierten elektromagnetischen Wellen in Höhe von 90° auf der Basis einer unterschiedlichen effektiven Permittivität in zwei zueinander orthogonalen Richtungen durch. Auf diese Weise kann vorteilhaft ein Phasenversatz von 90° realisiert werden, der für die Erzeugung einer elliptisch oder zirkular polarisierten elektromagnetischen Welle aus mindestens einer linear polarisierten elektromagnetischen Welle erforderlich ist. Dieses Erfordernis tritt auf, wenn die beiden linear polarisierten elektromagnetischen Wellen von der Antennenanordnung phasensynchron gesendet oder empfangen werden müssen.

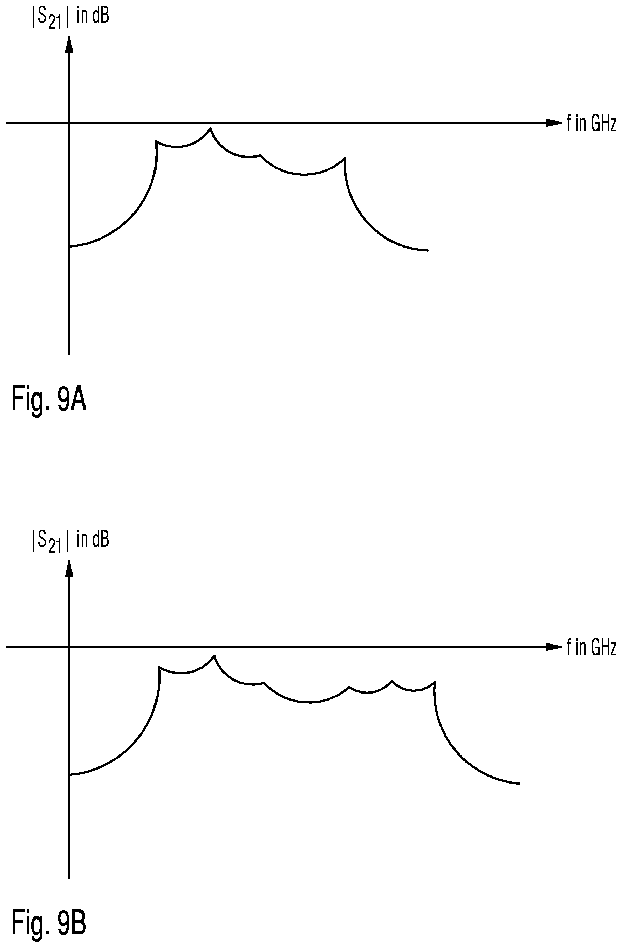

Aus dem Vergleich der spektralen Darstellungen des Betrags Transmissionsfaktors $S_{21}$ in den Figuren 9A und 9B sind in Fig. 9B gegenüber der Fig. 9A zwei weitere Maxima zu erkennen. Diese beiden zusätzlichen Maxima sind auf die beiden zusätzlichen Blenden in Fig. 6 zurückzuführen, die jeweils eine zusätzliche Resonanz bei einer zugehörigen Resonanzfrequenz erzielen. Auf diese Weise ist gezeigt, dass durch eine geeignete Auswahl und eine geeignete Kombination der vorgestellten Ausführungsformen der erfindungsgemäßen Ein- und Auskopplungsvorrichtung und durch eine geeignete Dimensionierung dieser einzelnen Ausführungsformen die Bandbreite der erfindungsgemäßen Ein- und Auskopplungsvorrichtung und damit die Bandbreite der in der erfindungsgemäßen Ein- und Auskopplungsvorrichtung übertragenen dual polarisierten elektromagnetischen Welle vorteilhaft erhöht werden kann.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

Bezugszeichenliste

| | |
|---|---|
| 1 | Hohlleiter |
| 2 | erste stirnseitige Öffnung |
| 3 | zweite stirnseitige Öffnung |
| 4 | Wellenleiter |
| 5 | elektrisch leitende Schicht |
| $6_1$, $6_2$ | Leiterpaar |
| $7_1$, $7_2$ | Dipolantenne |
| 8, 8', 8" | Trägermembran |

| | |
|---|---|
| 9 | Signalleitung |
| 10 | Steg |
| 11 | Nut |
| 12 | Kopf |
| $13_1$, $13_2$, $13_3$, $13_4$ | Bereich |
| 14, $14_1$, $14_2$, $14_3$ | Blende |
| 15 | elektrisch leitendes Element |
| 16 | Innenraum |
| 17 | Bauelement zur Konversion zwischen mindestens einer elliptisch polarisierten elektromagnetischen Welle und mindestens einer linear polarisierten elektromagnetischen Welle |

**Patentansprüche**

1. Ein- und Auskopplungsvorrichtung umfassend

- ein Halteelement,
- einen Schaltungsträger,
- einen Wellenleiter (4),
- wobei das Halteelement ein erstes Ende aufweist, an dem das Halteelement an den Schaltungsträger gekoppelt ist, und
- ein zweites Ende aufweist, an dem das Halteelement an den Wellenleiter (4) gekoppelt ist,
- zwei Dipolantennen ($6_1$, $6_2$), die zwischen dem ersten Ende und dem zweiten Ende überkreuzt und orthogonal zueinander angeordnet sind, und
- zwei überkreuzt zueinander angeordnete Leiterpaare ($7_1$, $7_2$), die mit den beiden Dipolantennen ($6_1$, $6_2$) und mit zugehörigen Kontaktflächen auf dem Schaltungsträger verbunden sind,
- wobei am ersten Ende eine elektrisch leitende Schicht (5) befestigt ist,
- wobei das Halteelement ein Hohlleiter (1) ist,
- wobei das erste Ende des Halteelements eine erste stirnseitige Öffnung (2) des Hohlleiters (1) ist, an der der Schaltungsträger gekoppelt ist, und
- das zweite Ende des Halteelements eine zweite stirnseitige Öffnung (3) des Hohlleiters (1) ist, an der der Wellenleiter (4) gekoppelt ist,
- wobei die erste stirnseitige Öffnung (2) mit der elektrisch leitenden Schicht (5) abgeschlossen ist, wobei der Hohlleiter (1) eine Trägermembran (8; 8'; 8") umfasst, und jede Dipolantenne ($6_1$, $6_2$) jeweils auf einer der ersten stirnseitigen Öffnung (2) zugewandten Stirnfläche oder auf einer der zweiten stirnseitigen Öffnung (3) jeweils zugewandten Stirnfläche der Trägermembran (8; 8'; 8") aufgebracht ist, wobei die Trägermembran (8; 8'; 8") in einem an die erste stirnseitige Öffnung (2) sich anschließenden Bereich des Hohlleiters (1) mit dem Hohlleiter (1) verbunden ist.

2. Ein- und Auskopplungsvorrichtung nach Patentanspruch 1, **dadurch gekennzeichnet,**
**dass** mindesten eine Dipolantenne ($6_1$, $6_2$) jeweils eine Patch-Antenne ist.

3. Ein- und Auskopplungsvorrichtung nach Patentanspruch 1 oder 2,
**dadurch gekennzeichnet,**
**dass** mindestens eine Dipolantenne ($6_1$, $6_2$) jeweils eine fraktal ausgeführte Patch-Antenne ist.

4. Ein- und Auskopplungsvorrichtung nach einem der Patentansprüche 1 bis 3,
**dadurch gekennzeichnet,**
**dass** ein Abstand 1 zwischen jeder Dipolantenne ($6_1$, $6_2$) und der elektrisch leitenden Schicht (5) gemäß der Gleichung $1=\lambda/4+n\cdot\lambda/2$ eingestellt ist, wobei $\lambda$ eine Wellenlänge der zu übertragenden elektromagnetischen Welle und n ein ganzzahliger Faktor ist.

5. Ein- und Auskopplungsvorrichtung nach einem der Patentansprüche 1 bis 4,
**dadurch gekennzeichnet,**
**dass** in Abhängigkeit eines Abstandes zwischen jeder Dipolantenne ($6_1$, $6_2$) und der elektrisch leitenden Schicht (5) eine reflexionsminimierte Übertragungscharakteristik der Ein- und Auskopplungsvorrichtung bei einer zugehörigen Resonanzfrequenz eingestellt ist.

6. Ein- und Auskopplungsvorrichtung nach einem der Patentansprüche 1 bis 5,
**dadurch gekennzeichnet,**
**dass** in einem zur ersten stirnseitigen Öffnung (2) sich anschließenden Bereich des Hohlleiters (1) mindesten ein Steg (10) derart am Hohlleiter (1) ausgeformt ist, dass die Trägermembran (8; 8'; 8'') gegen den mindestens einen Steg (10) anschlägt.

7. Ein- und Auskopplungsvorrichtung nach einem der Patentansprüche 1 bis 5,
**dadurch gekennzeichnet,**
**dass** die Trägermembran (8; 8'; 8'') in einer Vertiefung (11) des Hohlleiters (1) eingeklemmt ist, die in einem an die erste stirnseitige Öffnung (2) sich anschließenden Bereich des Hohlleiters (1) im Hohlleiter (1) ausgeführt ist.

8. Ein- und Auskopplungsvorrichtung nach Patentanspruch 7, **dadurch gekennzeichnet,**
**dass** die Trägermembran (8; 8'; 8'') elastisch ausgeführt ist und eine Längserstreckung der beiden Leiterpaare ($7_1$, $7_2$) derart ausgelegt ist, dass die beiden Leiterpaare ($7_1$, $7_2$) derart gegen die zugehörige Dipolantenne ($6_1$, $6_2$) drücken, dass die Trägermembran (8; 8'; 8") außerhalb der mindestens einen Vertiefung (11) des Halteelements (1) eine konkave Ausformung, bevorzugt eine wannenförmige Ausformung, aufweist.

9. Ein- und Auskopplungsvorrichtung nach Patentanspruch 7 oder 8,
**dadurch gekennzeichnet,**
**dass** in Abhängigkeit einer Tiefe der Vertiefung (11), einer Dicke der Trägermembran (8; 8'; 8'') und einer relativen Permittivität eines für die Trägermembran (8; 8'; 8'') verwendeten dielektrischen Materials eine reflexionsminimierte Übertragungscharakteristik der Ein- und Auskopplungsvorrichtung bei einer zugehörigen Resonanzfrequenz eingestellt ist.

10. Ein- und Auskopplungsvorrichtung nach einem der Patentanspruch 1 bis 9,
**dadurch gekennzeichnet,**
**dass** zwischen der zweiten stirnseitigen Öffnung (2) und den beiden Dipolantennen ($6_1$, $6_2$) mehrere axial aufeinander folgende Bereiche ($13_1$, $13_2$, $13_3$, $13_4$) des Hohlleiters (1) mit jeweils einem zugehörigen Innendurchmesser und einer zugehörigen axialen Erstreckung angeordnet sind.

11. Ein- und Auskopplungsvorrichtung nach Patentanspruch 10,
**dadurch gekennzeichnet,**
**dass** in Abhängigkeit der axialen Erstreckung und des Innendurchmessers des jeweiligen Bereichs ($13_1$, $13_2$, $13_3$, $13_4$) des Hohlleiters (1) eine reflexionsminimierte Übertragungscharakteristik der Ein- und Auskopplungsvorrichtung bei einer zugehörigen Resonanzfrequenz eingestellt ist.

12. Ein- und Auskopplungsvorrichtung nach einem der Patentansprüche 1 bis 11,
**dadurch gekennzeichnet,**
**dass** zwischen der zweiten stirnseitigen Öffnung (3) und den beiden Dipolantennen ($6_1$, $6_2$) mindestens eine Blende ($14$; $14_1$, $14_2$, $14_3$) vorgesehen ist, die jeweils an einer Innenmantelfläche des Hohlleiters (1) nach innen gerichtet ist.

13. Ein- und Auskopplungsvorrichtung nach Patentanspruch 12,
**dadurch gekennzeichnet,**
**dass** in Abhängigkeit eines Abstandes zu den beiden Dipolantennen ($6_1$, $6_2$), einer Längserstreckung und einer Quererstreckung der jeweiligen Blende ($14$; $14_1$, $14_2$, $14_3$) jeweils eine reflexionsminimierte Übertragungscharakteristik der Ein- und Auskoppelvorrichtung bei einer zugehörigen Resonanzfrequenz eingestellt ist.

14. Ein- und Auskopplungsvorrichtung nach einem der Patentansprüche 1 bis 13,
**dadurch gekennzeichnet,**
**dass** zwischen der zweiten stirnseitigen Öffnung (2, 3) und den beiden Dipolantennen ($6_1$, $6_2$) mindestens ein elektrisch leitendes Element (15) im Hohlleiter (1) angeordnet ist.

15. Ein- und Auskopplungsvorrichtung nach Patentanspruch 14,
**dadurch gekennzeichnet,**
**dass** jedes elektrisch leitende Element (15) jeweils hinsichtlich seiner Anordnung und seiner Geometrie so ausgelegt ist, dass jeweils eine zugehörige filternde Übertragungscharakteristik der Ein- und Auskopplungsvorrichtung realisiert ist.

**16.** Ein- und Auskopplungsvorrichtung nach einem der Patentansprüche 1 bis 15,
**dadurch gekennzeichnet,**
**dass** innerhalb des Hohlleiters (1) zwischen der zweiten stirnseitigen Öffnung (3) und den beiden Dipolantennen $(6_1, 6_2)$ ein Bauelement (17) zur Konversion zwischen mindestens einer elliptisch polarisierten elektromagnetischen Welle und mindestens einer linear polarisierten elektromagnetischen Welle angeordnet ist.

## Claims

1. A coupling and decoupling device comprising

   - a retaining element,
   - a circuit carrier,
   - a wave guide (4),
   - wherein the retaining element has a first end, on which the retaining element is coupled to the circuit carrier, and
   - has a second end, on which the retaining element is coupled to the wave guide (4),
   - two dipole antennas $(6_1, 6_2)$, which are crossed over between the first end and the second end and are arranged orthogonally to each other, and
   - two conductor pairs $(7_1, 7_2)$, which are arranged crossed over each other, which are connected to the two dipole antennas $(6_1, 6_2)$ and to associated contact surfaces on the circuit carrier,
   - wherein an electrically conductive layer (5) is fixed on the first end,
   - wherein the retaining element is a hollow conductor (1),
   - wherein the first end of the retaining element is a first end-face opening (2) of the hollow conductor (1), to which the circuit carrier is coupled, and
   - the second end of the retaining element is a second end-face opening (3) of the hollow conductor (1), to which the wave guide (4) is coupled, and
   - wherein the first end-face opening (2) is closed by the electrically conductive layer (5),
   wherein the hollow conductor (1) comprises a carrier membrane (8; 8'; 8"), and each dipole antenna $(6_1, 6_2)$ is applied in each case to an end face facing the first end-face opening (2) or to an end face of the carrier membrane (8; 8'; 8") in each case facing the second end-face opening (3), wherein the carrier membrane (8; 8'; 8") is connected to the hollow conductor (1) in a region of the hollow conductor (1) adjoining the first end-face opening (2).

2. The coupling and decoupling device according to patent claim 1,
   **characterized in**
   **that** at least one dipole antenna $(6_1, 6_2)$ is in each case a patch antenna.

3. The coupling and decoupling device according to patent claim 1 or 2,
   **characterized in**
   **that** at least one dipole antenna $(6_1, 6_2)$ is in each case a fractal patch antenna.

4. The coupling and decoupling device according to any one of patent claims 1 to 3,
   **characterized in**
   **that** a distance 1 between each dipole antenna $(6_1, 6_2)$ and the electrically conductive layer (5) is set according to the equation $1=\lambda/4+n\cdot\lambda/2$, wherein $\lambda$ is a wave length of the electromagnet wave to be transmitted and n is an integer factor.

5. The coupling and decoupling device according to any one of patent claims 1 to 4,
   **characterized in**
   **that** reflection-minimized transmission characteristic of the coupling and decoupling device is set at an associated resonant frequency as a function of a distance between each dipole antenna $(6_1, 6_2)$ and the electrically conductive layer (5).

6. The coupling and decoupling device according to any one of patent claims 1 to 5,
   **characterized in**
   **that** in a region of the hollow conductor (1) adjoining the first end-face opening (2) at least one web (10) is formed on the hollow conductor (1) in such a manner that the carrier membrane (8; 8'; 8") abuts against at least one web (10).

**7.** The coupling and decoupling device according to any one of patent claims 1 to 5,
**characterized in**
**that** the carrier membrane (8; 8'; 8") is clamped in a recess (11) of the hollow conductor (1), which is formed in the hollow conductor (1) in a region of the hollow conductor (1) adjoining the first end-face opening (2).

**8.** The coupling and decoupling device according to patent claim 7,
**characterized in**
**that** the carrier membrane (8; 8'; 8") is designed so as to be elastic and a longitudinal extension of the two conductor pairs ($7_1$, $7_2$) is designed in such a manner that the two conductor pairs ($7_1$, $7_2$) press against the associated dipole antenna ($6_1$, $6_2$) in such a manner that the carrier membrane (8; 8'; 8") has a concave shape, preferably a trough-like shape, outside of the at least one recess (11) of the retaining element (1).

**9.** The coupling and decoupling device according to patent claim 7 or 8,
**characterized in**
**that** a reflection-minimized transmission characteristic of the coupling and decoupling device is set at an associated resonant frequency as a function of the depth of the recess (11), a thickness of the carrier membrane (8; 8'; 8") and a relative permittivity of a dielectric material used for the carrier membrane (8; 8'; 8").

**10.** The coupling and decoupling device according to any one of patent claims 1 to 9,
**characterized in**
**that** several axially successive regions ($13_1$, $13_2$, $13_3$, $13_4$) of the hollow conductor (1), having in each case an associated internal diameter and an associated axial extension, are arranged between the second end-face opening (2) and the two dipole antennas ($6_1$, $6_2$).

**11.** The coupling and decoupling device according to patent claim 10,
**characterized in**
**that** a reflection-minimized transmission characteristic of the coupling and decoupling device is set at an associated resonant frequency as a function of the axial extension and the internal diameter of the respective region ($13_1$, $13_2$, $13_3$, $13_4$) of the hollow conductor (1).

**12.** The coupling and decoupling device according to any one of patent claims 1 to 11,
**characterized in**
**that** at least one diaphragm (14; $14_1$, $14_2$, $14_3$) is provided between the second end-face opening (3) and the two dipole antennas ($6_1$, $6_2$), which in each case is directed inwards on an inner lateral surface of the hollow conductor (1).

**13.** The coupling and decoupling device according to patent claim 12,
**characterized in**
**that** in each case a reflection-minimized transmission characteristic of the coupling and decoupling device is set at an associated resonant frequency as a function of a distance from the two dipole antennas ($6_1$, $6_2$), a longitudinal extension and a transverse extension of the respective diaphragm (14; $14_1$, $14_2$, $14_3$).

**14.** The coupling and decoupling device according to any one of patent claims 1 to 13,
**characterized in**
**that** at least one electrically conductive element (15) is arranged in the hollow conductor (1) between the second end-face opening (2, 3) and the two dipole antennas ($6_1$, $6_2$).

**15.** The coupling and decoupling device according to patent claim 14,
**characterized in**
**that** each electrically conductive element (15) is designed in each case with respect to its arrangement and its geometry such that in each case an associated filtering transmission characteristic of the coupling and decoupling device is realized.

**16.** The coupling and decoupling device according to any one of patent claims 1 to 15,
**characterized in**
**that** a component (17) for the conversion between at least one elliptically polarized electromagnetic wave and at least one linearly polarized electromagnetic wave is arranged within the hollow conductor (1) between the second end-face opening (3) and the two dipole antennas ($6_1$, $6_2$).

**Revendications**

1. Dispositif de couplage et de découplage comprenant

   - un élément de maintien,
   - un support de circuit,
   - un guide d'ondes (4),
   - dans lequel l'élément de maintien comprend une première extrémité au niveau de laquelle l'élément de maintien est couplé au support de circuit et
   - une deuxième extrémité, au niveau de laquelle l'élément de maintien est couplé au guide d'ondes (4)
   - deux antennes dipolaires ($6_1$, $6_2$), qui sont disposées entre la première extrémité et la deuxième extrémité, de manière croisée et orthogonale entre elles et
   - deux paires de conducteurs ($7_1$, $7_2$), disposé de manière croisée entre elles, qui sont reliées avec les deux antennes dipolaires ($6_1$, $6_2$) et avec des surfaces de contact correspondantes sur le support de circuit,
   - dans lequel, au niveau de la première extrémité, est fixée une couche électro-conductrice (5),
   - dans lequel l'élément de maintien est un conducteur creux (1),
   - dans lequel la première extrémité de l'élément de maintien est une première ouverture frontale (2) du conducteur creux (1), au niveau de laquelle le support de circuit est couplé et
   - la deuxième extrémité de l'élément de maintien est une deuxième ouverture frontale (3) du conducteur creux (1), au niveau de laquelle le guide d'ondes (4) est couplé,
   - dans lequel la première ouverture frontale (2) est obturée avec la couche électro-conductrice (5),
   dans lequel le conducteur creux (1) comprend une membrane porteuse (8 ; 8' ; 8") et chaque antenne dipolaire ($6_1$, $6_2$) est appliquée respectivement sur une surface frontale orientée vers la première ouverture frontale (2) ou sur une surface frontale orientée respectivement vers la deuxième ouverture frontale (3) de la membrane porteuse (8 ; 8' ; 8"), dans lequel la membrane porteuse (8 ; 8' ; 8") est reliée avec le conducteur creux (1) dans une partie du conducteur creux (1) se raccordant à la première ouverture frontale (2).

2. Dispositif de couplage et de découplage selon la revendication 1,
   **caractérisé en ce que**
   au moins une antenne dipolaire ($6_1$, $6_2$) est respectivement une antenne patch.

3. Dispositif de couplage et de découplage selon la revendication 1 ou 2,
   **caractérisé en ce que**
   au moins une antenne dipolaire ($6_1$, $6_2$) est respectivement une antenne patch réalisée de manière fractale.

4. Dispositif de couplage et de découplage selon l'une des revendications 1 à 3,
   **caractérisé en ce que**
   une distance l entre chaque antenne dipolaire ($6_1$, $6_2$) et la couche électro-conductrice (5) est ajustée selon l'équation $l = \lambda/4 + n \cdot \lambda/2$, dans lequel $\lambda$ est une longueur d'onde de l'onde électromagnétique à transmettre et n est un facteur entier.

5. Dispositif de couplage et de découplage selon l'une des revendications 1 à 4,
   **caractérisé en ce que**
   en fonction d'une distance entre chaque antenne dipolaire ($6_1$, $6_2$) et la couche électro-conductrice (5), une caractéristique de transmission à réflexion minimisée du dispositif de couplage et de découplage est ajustée pour une fréquence de résonance correspondante.

6. Dispositif de couplage et de découplage selon l'une des revendications 1 à 5,
   **caractérisé en ce que**
   dans une partie du conducteur creux (1), se raccordant à la première ouverture frontale (2), est formée au moins une nervure (10) sur le conducteur creux (1), de façon à ce que la membrane porteuse (8 ; 8' ; 8") s'appuie contre l'au moins une nervure (10).

7. Dispositif de couplage et de découplage selon l'une des revendications 1 à 5,
   **caractérisé en ce que**
   la membrane porteuse (8 ; 8' ; 8") est serrée dans une cavité (11) du conducteur creux (1), qui est réalisée dans le conducteur creux (1), dans une partie du conducteur creux (1) se raccordant à la première ouverture frontale (2).

**8.** Dispositif de couplage et de découplage selon la revendication 7,
**caractérisé en ce que**
la membrane porteuse (8 ; 8' ; 8") est réalisée de manière élastique et une extension longitudinale des deux paires de conducteurs ($7_1$, $7_2$) est conçue de façon à ce que les deux paires de conducteurs ($7_1$, $7_2$) s'appuient contre les antennes dipolaires ($6_1$, $6_2$) de façon à ce que la membrane porteuse (8 ; 8' ; 8") présente, à l'extérieur de l'au moins une cavité (11) de l'élément de maintien (1), une forme concave, de préférence une forme de cuve.

**9.** Dispositif de couplage et de découplage selon la revendication 7 ou 8,
**caractérisé en ce que**
en fonction d'une profondeur de la cavité (11), d'une épaisseur de la membrane porteuse (8 ; 8' ; 8") et d'une permittivité relative d'un matériau diélectrique utilisé pour la membrane porteuse (8 ; 8' ; 8"), une caractéristique de transmission à réflexion minimisée du dispositif de couplage et de découplage est ajustée pour une fréquence de résonance correspondante.

**10.** Dispositif de couplage et de découplage selon l'une des revendications 1 à 9,
**caractérisé en ce que**
entre la deuxième ouverture frontale (2) et les deux antennes dipolaires ($6_1$, $6_2$), sont disposées plusieurs parties ($13_1$, $13_2$, $13_3$, $13_4$), se succédant axialement, du conducteur creux (1), avec respectivement un diamètre intérieur correspondant et une extension axiale correspondante.

**11.** Dispositif de couplage et de découplage selon la revendication 10, **caractérisé en ce que**
en fonction de l'extension axiale et du diamètre intérieur de la partie ($13_1$, $13_2$, $13_3$, $13_4$) respective du conducteur creux (1), une caractéristique de transmission à réflexion minimisée du dispositif de couplage et de découplage est ajustée pour une fréquence de résonance correspondante.

**12.** Dispositif de couplage et de découplage selon l'une des revendications 1 à 11,
**caractérisé en ce que**
entre la deuxième ouverture frontale (3) et les deux antennes dipolaires ($6_1$, $6_2$), est prévu au moins un diaphragme (14 ; $14_1$, $14_2$, $14_3$), qui est orientée respectivement vers l'intérieur sur une surface d'enveloppe externe du conducteur creux (1).

**13.** Dispositif de couplage et de découplage selon la revendication 12,
**caractérisé en ce que**
en fonction d'une distance par rapport aux deux antennes dipolaires ($6_1$, $6_2$), d'une extension longitudinale et d'une extension transversale du diaphragme (14 ; $14_1$, $14_2$, $14_3$) respectif, une caractéristique de transmission à réflexion minimisée du dispositif de couplage et de découplage est ajustée pour une fréquence de résonance correspondante.

**14.** Dispositif de couplage et de découplage selon l'une des revendications 1 à 13,
**caractérisé en ce que**
entre la deuxième ouverture frontale (2, 3) et les deux antennes dipolaires ($6_1$, $6_2$), est disposé au moins un élément électro-conducteur (15) dans le conducteur creux (1).

**15.** Dispositif de couplage et de découplage selon la revendication 14,
**caractérisé en ce que**
chaque élément électro-conducteur (15) est respectivement conçu, en ce qui concerne sa disposition et sa géométrie, de façon à ce qu'une caractéristique de transmission filtrante correspondante du dispositif de couplage et de découplage soit obtenue.

**16.** Dispositif de couplage et de découplage selon l'une des revendications 1 à 15,
**caractérisé en ce que**
à l'intérieur du conducteur creux (1), entre la deuxième ouverture frontale (3) et les deux antennes dipolaires ($6_1$, $6_2$), est disposé un composant (17) pour la conversion entre au moins une onde électromagnétique polarisée de manière elliptique et au moins une onde électromagnétique polarisée de manière linéaire.

Fig. 1

Fig. 2A

Fig. 2B

Fig. 2C

Fig. 3A

EP 3 707 775 B1

CC:

Fig. 3B

DD:

Fig. 3C

Fig. 4A

Fig. 4B

EP 3 707 775 B1

EP 3 707 775 B1

Fig. 4C

25

Fig. 5

Fig. 6

Fig. 7

Fig. 8

|S$_{21}$| in dB

f in GHz

Fig. 9A

|S$_{21}$| in dB

f in GHz

Fig. 9B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9728833 B2
- DE 10035820 A1
- AU 761339 B2
- US 4241323 A

**In der Beschreibung aufgeführte Nicht-Patentliteratur**

- **LEHMENSIEK ROBERT.** *A design methodology of the wideband orthogonal mode transducer for SKA Band 2 feed,* 10. April 2016
- **JAE-HOON BANG et al.** *A new dual circularly polarized feed employing a dielectric cylinder-loaded circular waveguide open end fed by crossed dipoles,* 01. Januar 2016, 1-7